# EUROPÄISCHE PATENTSCHRIFT

(11) **EP 2 522 407 B1**
(45) Veröffentlichungstag und Bekanntmachung des Hinweises auf die Patenterteilung: **19.03.2014**
(21) Anmeldenummer: 12173323.2
(22) Anmeldetag: 30.10.2009
(51) Int. Cl.: A63F 3/02, B65G 54/00

(54) **Transport eines Objekts über eine Oberfläche**
Transport of an object over a surface
Transport d'un objet sur une surface

(30) Priorität: 14.11.2008 DE 102008057389
(43) Veröffentlichungstag der Anmeldung: 14.11.2012
(62) Teilanmeldung aus: 09752113.2
(73) Patentinhaber: Fraunhofer-Gesellschaft zur Förderung der angewandten Forschung e.V., 80686 München (DE)
(72) Erfinder: Krägeloh, Stefan, 91056 Erlangen (DE); Popp, Harald, 90587 Tuchenbach (DE); Bernhard, Josef, 92507 Nabburg (DE); Sporer, Thomas, 90766 Fürth (DE); Brix, Sandra, 98693 Ilmenau (DE); Lutzky, Manfred, 90427 Nürnberg (DE); Gayer, Marc, 91058 Erlangen (DE); Fuchs, Harald, 91341 Roettenbach (DE)
(74) Vertreter: Schenk, Markus

(56) Entgegenhaltungen:
- EP-A1- 1 484 269
- WO-A1-2004/076320
- GB-A- 1 381 326
- JP-A- 2002 128 260
- KR-A- 20070 011 245

## Beschreibung

Die vorliegende Erfindung bezieht sich auf den Transport eines Objekts über eine Oberfläche, wie z.B. einer Spielfigur, über ein Spielbrett.

Das "klassische" Brettspiel besteht aus einem physikalischen Spielplan (Spielbrett) und Spielfiguren. Die Spielfiguren werden auf das Brett gestellt und von den (menschlichen) Spielern gemäß den Spielregeln bewegt. Ein üblicher Computer hat keinen Zugang zu einem solchen klassischen Spiel. Er kennt weder die Position der Spielfiguren auf dem Plan noch kann er die Figuren bewegen.

Bei der heute üblichen Adaption eines klassischen Brettspiels auf einen Computer werden Spielbrett und Spielfiguren "virtuell" im Computer aufgebaut und auf dem Bildschirm des Computers angezeigt. Der Computer kennt die Positionen aller Figuren auf dem virtuellen Spielplan. Bewegungen der Spielfiguren finden nur auf diesem virtuellen Spielplan statt. Die Figuren können im engeren Sinn nur "vom Computer" gezogen werden. Natürlich kann der Computer den Zug aufgrund einer Eingabe durch einen Menschen durchführen. Dadurch wird es möglich, dass Computer und Mensch auf dem virtuellen Spielplan "zusammen" spielen. Dieser Mechanismus kann in Verbindung mit einem Netzwerk auch dazu genützt werden, verschiedene Menschen an einem gemeinsamen Spiel teilhaben zu lassen, wenn sie sich an räumlich getrennten Orten befinden.

Da der Mensch aber gerne "echte" Spielfiguren in die Hand nimmt und bewegt und oft auch die Darstellung auf einem physikalischen Spielbrett bevorzugt, ist es z. B. bei Schach-Spielcomputern auch üblich, dass zwar im Computer virtuell Spielplan und Figuren aufgebaut und gezogen werden, der Mensch die Züge aber außerhalb des Computers auf einem echten Spielbrett nachstellt. Über ein geeignetes Interface teilen sich Mensch und Computer dabei gegenseitig die durchgeführten Züge mit, der Mensch aktualisiert dann die Position der Spielfiguren auf dem physikalischen Spielbrett.

Gerade bei Schach-Spielcomputern ist es auch üblich, Positionsänderungen der Spielfiguren über mechanische oder magnetische Schalter für den Computer direkt erkennbar zu machen. Hier sitzt ein Schalter unter einem fest vorgegebenen Spielfeld. Wird eine Spielfigur auf dem Spielfeld bewegt, wird der Schaltmechanismus beim Startfeld des Spielzuges und beim Zielfeld des Spielzuges betätigt. Aus diesen Informationen kann der Schach-Spielcomputer den Spielzug elektronisch erfassen und speichern. Die Information, um welche Spielfigur es sich bei diesem Spielzug handelt, wird bei heutigen Systemen nicht mit erfasst. Diese Information erzeugt sich der Computer selbst durch das Fortschreiben aller Spielzüge ausgehend von einer definierten Grundposition. Vom Computer angezeigte Spielzüge des Computers muss üblicherweise der Mensch auf dem physikalischen Brett ausführen.

Es sind auch Lösungen bekannt, bei denen der Computer über einen Roboter-Greifarm die Spielfigur direkt bewegt, dies ist aber eine recht aufwändige Methode und wird deshalb nur selten angewendet. Außerdem sind diese Lösungen typischerweise auf ein bestimmtes Spiel, z. B. Schach, spezialisiert. Des Weiteren leiden diese Lösungen unter einigen Einschränkungen. So können z. B. nicht mehrere Spielfiguren gleichzeitig bewegt werden.

In der DE102006009451.4 wurde vorgeschlagen zur Lokalisierung von Spielsteinen auf dem Spielbrett RFID-Technologie zu nutzen, wozu unter den Spielfeldern des Spielbretts ein RFID-Reader oder eine Readerantenne angebracht und die Spielfigur mit einem RFID-Transponder ausgestattet sind. Wird die Spielfigur auf ein Feld gestellt, wird der Transponder von dem Reader unter dem Spielfeld ausgelesen und identifiziert. Die Spielfigur wird dann der Position des Readers oder Readerspule zugeordnet.

Gemäß der noch unveröffentlichten DE 102008006043.7 wird
- der Spielplan durch ein liegendes Computerdisplay, z.B. in Form eines LCDs, ersetzt, das somit beliebige Spielpläne anzeigen kann.
- jede Spielfigur mit einem optischen Sensor auf der Unterseite versehen, besitzen eine ID und sind über eine Funkverbindung mit dem Spielecomputer verbunden.

Bei diesem letztgenannten Verfahren kann der Spielecomputer Art und Position der auf dem Spielbrett stehenden Spielfiguren durch geeignete Kombination der auf dem Spielplan angezeigten Information und Fernauslesen des Sensors in der Spielfigur automatisch ermitteln. Da dies recht genau und zügig geschehen kann, kann der Spielecomputer die Position der Spielfiguren auf dem Spielbrett quasi kontinuierlich verfolgen (tracken).

Nach der vorhergehenden Lösung ist es also möglich, eine universelle Computer-Adaption eines Brettspiels zu bauen, bei der der Computer einen variablen Spielplan auf einem als Spielbrett fungierenden Bildschirm darstellt und die Position von einer Vielzahl von physikalischen, passiven Spielfiguren automatisch erfasst. Eine automatische und effiziente Bewegung dieser physikalischen Figuren durch den Computer ist, mit geringem technischem Aufwand, nach dem Stand der Technik allerdings nicht möglich. Es wären allenfalls technisch aufwändige Speziallösungen mit Computer-Greifarm oder aktiven, sich selbst bewegenden Spielfiguren denkbar, die aber über viele Nachteile verfügen.

Es wäre aber wünschenswert, frei auf einem Spielbrett verteilte passive Spielfiguren effizient und automatisch durch einen Computer bewegbar zu machen, ohne dabei einen Roboter-Greifarm verwenden zu müssen, oder ohne einen aktiven Antrieb in den Spielfiguren zu benötigen.

Probleme der oben beschriebenen Art treten natürlich auch anderswo auf und sind nicht auf Spielszenarien begrenzt. Zudem variieren die Probleme bei der Bewegung der Spielfiguren je nach Spiel. Beispielsweise stellt ein Spiel mit nur einer Spielfigur weniger Anforderung an die Bewegungserzeugung als ein Spiel mit mehreren Spielfiguren, bei denen gezielt eine oder eine echte Teilmenge der Spielfiguren relativ zu den anderen Spielfiguren über die Oberfläche bzw. das Spielbrett bewegt werden muss. Ferner sind manche Spielfiguren rotationssymmetrisch aufgebaut, so dass deren Drehausrichtung relativ zu der Oberflächennormalen unerheblich ist, wohingegen dies bei anderen Spielfiguren anders sein mag und zudem bei manchen Spielen die Ausrichtung der Spielfigur bzw. deren Blickrichtung Bedeutung hat.

Die WO2004/076320 beschreibt eine Vorrichtung zum berührungslosen Transportieren und Positionieren von Bauteilen bereitgestellt, wobei die Bauteile entlang einer vorzugsweise geneigten Transportbahn abwärts gleiten. Die erforderlichen Mittel zum Erzeugen eines Schwebezustandes der Bauteile sind aus dem Stand der Technik bekannt. Der Kerngedanke der Erfindung besteht darin, das Bauteil, das sich mit einer Geschwindigkeit v auf oder an der Bahn auf einen Zielpunkt hin bewegt, berührungslos abzubremsen. Wenn das Bauteil in einen vorbestimmten Bahnabschnitt einläuft, wird seine Lage und/oder seine Geschwindigkeit ermittelt und diese Daten an einen Rechner übertragen Von einem Rechen-und Regelalgorithmus wird ermittelt, zu welchem Zeitpunkt, mit welchem Winkel und mit welcher Winkelgeschwindigkeit eine aufwärtsgerichtete Kippung der Transportbahn erfolgen muss, um das Bauteil im oder nahe an einem vorbestimmten Zielpunkt zum Stillstand zu bringen. Es ist nicht notwendig, dass der Zielpunkt mit einer einzigen Kippbewegung erreicht wird. Je nach technologischen Erfordernissen kann das Bauteil auch durch mehrmaliges Vor- und Zurückkippen der Transportbahn auf den Zielpunkt einbalanciert werden.

Die Aufgabe der vorliegenden Erfindung besteht deshalb darin, ein Konzept zur Bewegung von Spielfiguren über eine Oberfläche zu schaffen, das weniger aufwändig im Hinblick auf beispielsweise Kosten und Platz implementierbar ist und/oder die Einsetzbarkeit dadurch erweitert, dass die zur Bewegungserzeugung notwendigen Elemente mit einer größeren Anzahl von möglichen Erfassungsprinzipien zur Erfassung von Bewegungen auf der Spieloberfläche verträglich sind.

Diese Aufgabe wird durch ein System gemäß Anspruch 1 und ein Verfahren gemäß Anspruch 6 gelöst.

Ein Grundgedanke, auf dem die vorliegende Erfindung basiert, besteht darin, dass es in dem Fall des Bestimmens einer Lage des Objekts auf der Oberfläche möglich ist, auch Transportmechanismen für den Transport des Objekts auf der Oberfläche einzusetzen, die zu weniger reproduzierbaren Transportbewegungen führen, da die Regelung direkt auf Basis der beobachteten Bewegung im Vergleich zur gewünschten Bewegung durchgeführt werden kann.

Gemäß Ausführungsbeispielen der vorliegenden Erfindung wird die Transportbewegung durch Biegewellen in der Oberfläche bewirkt. Gemäß einem Ausführungsbeispiel werden hierzu sich in der Oberfläche ausbreitende Oberflächenwellen gemäß einer Wellenfeldsynthese berechnet, derart, dass die resultierende tangential zu der Oberfläche verlaufende Bewegungskomponente von Oberflächenpunkten der Oberfläche an den durch die Biegewellen erzeugten Oberflächenwellenbergen, auf denen das Objekt vornehmlich aufliegt, zu einer Bewegung des Objekts in Richtung der gewünschten Lage führt.

Gemäß einigen Ausführungsbeispielen wird zusätzlich zum Biegewellenantrieb ein Luftkissen zwischen Objekt und Oberfläche erzeugt. Solchermaßen "getragen" kann das Objekt dann auf Basis verschiedenster berührungslos arbeitender Einrichtungen lateral bewegt werden. Gemäß einem Ausführungsbeispiel erfolgt die Erzeugung des Luftkissens unterhalb des Objektes lateral selektiv am Ort des Objektes, wie er durch die Lagebestimmungseinrichtung erhalten worden ist. Auf diese Weise ist es möglich, die Transportreibung eines oder mehrerer bestimmter Objekte unter einer Mehrzahl von Objekten gezielt gegenüber den anderen zu reduzieren, so dass die die laterale Kraft ausübende Einrichtung die Kraft nicht zielgenau nur für das eine oder die mehreren bestimmten Objekte erzeugen muss, sondern auch die Erzeugung eines Feldes möglich ist, das auf alle Objekte gemeinsam wirkt, aber nur für die Objekte mit der reduzierten Transportreibung zu einer tatsächlichen Bewegung führt. Zusätzlich kann die zur Erzeugung des Luftkissens verwendete Druckluft, die durch die Oberfläche, über die das Objekt zu transportieren ist, geblasen wird, nicht nur zur Reduzierung der Transportreibung über die Oberfläche verwendet werden, sondern sie kann auch zu einer Erzeugung lateraler Kräfte zur Bewegung des Objekts lateral über die Oberfläche verwendet werden. Gemäß einem Ausführungsbeispiel geschieht dies in Kombination mit einer speziellen Ausgestaltung des Bodens des Objekts, in welchem mehrere Luftkammern gebildet sind, die untereinander getrennt sind und von denen eine oder mehrere eine Öffnung in der Seitenwand aufweisen, durch die die Luft des Luftkissens lateral ausströmen kann, wodurch durch den entstehenden Rückstoß das Objekt eine laterale Kraft erfährt. In Kombination mit einer geeigneten Lagebestimmungseinrichtung, die also die Lage des Objekts auf der Oberfläche bestimmt und in Kombination mit einer dichten Verteilung von individuell ansteuerbaren Luftdüsen zur Erzeugung des Luftkissens kann auf diese Weise gezielt Luft in eine gewünschte Teilmenge der Luftkammern des Objekts geblasen werden, so dass das Objekt in die gewünschte Lage bewegt wird. Alternativ ist natürlich auch das Vorsehen von Schließ- und Öffnungsmechanismen zum Schließen und Öffnen der seitlichen Öffnungen der Luftkammern des Objektes möglich, wobei die Notwendigkeit entfiele, die Luftdüsen individuell anzusteuern.

Gemäß einigen Ausführungsbeispielen erfolgt die Transportbewegungserzeugung über die Oberfläche zusätzlich magnetisch. Entlang der Oberfläche verteilt sind individuell ansteuerbare Magnetspulen angeordnet, die getrennt voneinander ansteuerbar sind, um magnetische Dipole mit einer Ausrichtung senkrecht zu der Oberfläche zu erzeugen. Bei Versehen des Objekts mit einem magnetisch anzieh- oder abstoßbaren Element oder einer Mehrzahl solcher Elemente ist es möglich, das Objekt über die Oberfläche zu schieben, nämlich auf Basis magnetischer Abstoßung, oder zu ziehen, nämlich auf Basis magnetischer Anziehung.

Allen Aspekten gemein ist, dass keine Greifarme oder sonstige Aufbauten oberhalb der Oberfläche notwendig sind, die ansonsten entweder die Ästhetik der Apparatur bzw. des Spiels oder sonst wie die Applikation stören könnten. Vielmehr ist es möglich, die zur Bewegungserzeugung gemäß den oben genannten Aspekten notwendigen Komponenten unterhalb der Transportoberfläche zu verstecken. Dabei ermöglichen es diese Aspekte ebenfalls, dass auch die Lagebestimmung optisch durch die Transportoberfläche durchgeführt wird. Gemäß Ausführungsbeispielen der vorliegenden Erfindung wird dies ausgenutzt, indem die einzelnen Transportmechanismen mit einer Lagebestimmungseinrichtung kombiniert werden, die eine Bildschirmanzeige in Kombination mit einem optischen Sensor in dem Objekt verwendet, wie es im Folgenden noch genauer beschrieben wird. Dadurch wird es möglich, die Transportoberfläche zusammen mit den meisten zur Lagebestimmung und Transportbewegungserzeugung notwendigen Komponenten in einem Bauteil zu integrieren, das zudem in der Lage ist, jedwedes Muster auf der Transportoberfläche anzuzeigen.

Bevorzugte Ausführungsbeispiele der vorliegenden Erfindung werden nachfolgend Bezug nehmend auf die beiliegenden Zeichnungen näher erläutert. Es zeigen:
- Fig. 1: ein schematisches Blockschaltbild eines Systems zum Transport bzw. zur Bewegung eines Objekts über eine Oberfläche;
- Fig. 2: eine Teilraumansicht einer Düsenplatte;
- Fig. 3: eine Unteransicht auf einen Boden eines Objekts;
- Fig. 4a und 4b: eine schematische Draufsicht auf eine Düsenplatte mit individuell ansteuerbaren Luftdüsen und mit auf der Oberfläche befindlichem Objekt mit einem Boden gemäß Fig. 3, wobei die Fig. 4a und 4b unterschiedliche Lageänderungen hervorrufen, indem unterschiedliche Luftdüsen aktiviert werden;
- Fig. 5a und 5b: Draufsicht auf eine Luftdüse gemäß einem Ausführungsbeispiel in einem geschlossenen bzw. geöffneten Zustand;
- Fig. 6a und 6b: Draufsichten wie in Fig. 4a und 4b für Luftdüsen des Typs nach Fig. 5a und 5b;
- Fig. 7: eine schematische Ansicht eines Teils des Systems nach Fig. 1 zur Veranschaulichung einer möglichen Einrichtung zum Bewegen des Objekts über die Oberfläche gemäß einem Vergleichsbeispiel;
- Fig. 8: eine Unteransicht des Bodens eines Objekts gemäß einem weiteren Beispiel;
- Fig. 9a: eine Teilraumansicht eines Magnetspulenarrays;
- Fig. 9b: eine schematische Draufsicht auf das Array von Fig. 9a;
- Fig. 10a bis 10c: schematische Seitenansichten eines auf der Trans-portoberfläche befindlichen Objekts mit unterschiedlichen magnetischen Wirkungsweisen zwischen Magnetarray und Objekt gemäß unterschiedlicher Beispiele;
- Fig. 11a und 11b: schematische Grundrissansichten eines Objekts mit unterschiedlichen magnetisch anzieh- bzw. magnetisch abstoßbaren Elementen;
- Fig. 12a und 12b: schematische Draufsichten auf ein Magnetspulenar-ray und eines darauf befindlichen Objekts mit einer Darstellung von Beispielen unterschiedlicher Aktivierungsmuster von Magnetspulen in dem Magnetarray zur Erzeugung unterschiedlicher Lageänderungen des Objekts auf der Oberfläche;
- Fig. 13a und 13b: schematische Draufsichten wie in den Fig. 12a und 12b, jedoch unter Verwendung einer magnetisch abstoßenden Wirkungsweise;
- Fig. 14: eine schematische Zeichnung zur Veranschaulichung einer Bewegungserzeugung mittels Oberflächenwellen gemäß einem Ausführungsbeispiel der vorliegenden Erfindung;
- Fig. 15a und 15b: eine Schnittansicht und eine Draufsicht einer entlang einer Umfangskante einer die Transportoberfläche bildenden Platte verlaufenden Biegewellenerzeugungseinrichtung gemäß einem Ausführungsbeispiel der vorliegenden Erfindung;
- Fig. 16: eine schematische Seitenschnittdarstellung einer Einrichtung zur Bestimmung einer Lage eines Objekts auf einer Anzeige;
- Fig. 17: eine schematische Darstellung einer Spielvorrichtung mit einer Spielfigur-positionsbestimmenden Funktionalität;
- Fig. 18: eine schematische Darstellung eines Aufbaus einer Sendeeinrichtung aus Fig. 17;
- Fig. 19: ein Flussdiagramm zur Veranschaulichung der Funktionsweise der Spielvorrichtung von Fig. 17;
- Fig. 20: eine schematische Darstellung von möglichen Mustern zur Detektion der Position und der Orientierung der Spielfiguren in Fig. 17 und 18 auf einer Anzeige;
- Fig. 21: ein Flussdiagramm zur Veranschaulichung der Funktionsweise der Spielvorrichtung von Fig. 17;
- Fig. 22: eine schematische Darstellung einer Sequenz von Bildschirmanzeigen, die schrittweise bei der binären Suche innerhalb des Verfahrens nach Fig. 21 verwendet werden kann;
- Fig. 23: eine Schnittansicht eines unteren Teils einer Spielfigur, angeordnet auf einer Anzeige;
- Fig. 24: eine schematische Schnittansicht eines Sockels mit einer Sendeeinrichtung zur Befestigung an einer Unterseite einer Spielfigur;
- Fig. 25: eine schematische Darstellung einer mit einer Maske abgedeckten Fotozelle; und
- Fig. 26a: eine Schnittansichten durch einen Aufbau eines Bauteils, das die Transportoberfläche bildet und Teile der Bewegungserzeugungseinrichtung und der Lagebestimmungseinrichtung umfasst, so dass außerhalb desselben lediglich noch ansteuernde und auswertende Einheiten, wie z. B. ein Computer, notwendig sind;
- Fig. 26b: eine Schnittseitenansicht einer Spielfigur, die zusammen mit dem Bauteil von Fig. 26a verwendet werden kann; und
- Fig. 26c: eine Schnittansichten durch einen Aufbau eines Bauteils, das die Transportoberfläche bildet und Teile der Bewegungserzeugungseinrichtung und der Lagebestimmungseinrichtung umfasst, gemäß einem weiteren Ausführungsbeispiel.

Nachfolgend werden unterschiedliche Ausführungsbeispiele der vorliegenden Erfindung näher beschrieben. Dabei werden Elemente, die wiederholt in unterschiedlichen Figuren auftreten, mit gleichen oder ähnlichen Bezugszeichen versehen und eine wiederholte Beschreibung derselben oder ihrer Funktion wird vermieden.

Insbesondere werden unterschiedliche Beispiele beschrieben, die aber auch teilweise miteinander kombinierbar sind, worauf auch im Folgenden an mehreren Stellen hingewiesen wird.

Obwohl die Beschreibung häufig speziell auf Spieleanwendungen Bezug nimmt, ist die vorliegende Erfindung natürlich auch auf andere Anwendungsgebiete anwendbar, bei denen Objekte automatisch über eine Oberfläche bewegt werden sollen, wie z.B. in Logistikanwendungen oder dergleichen.

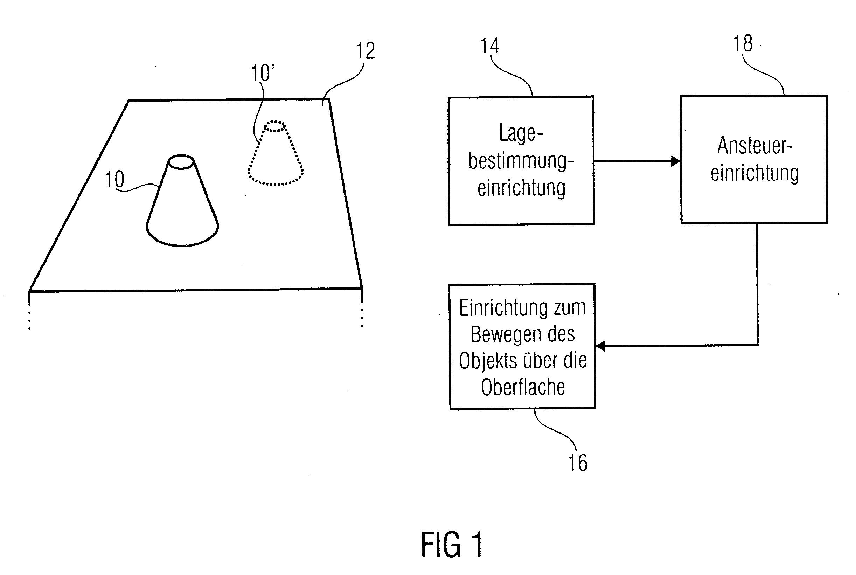

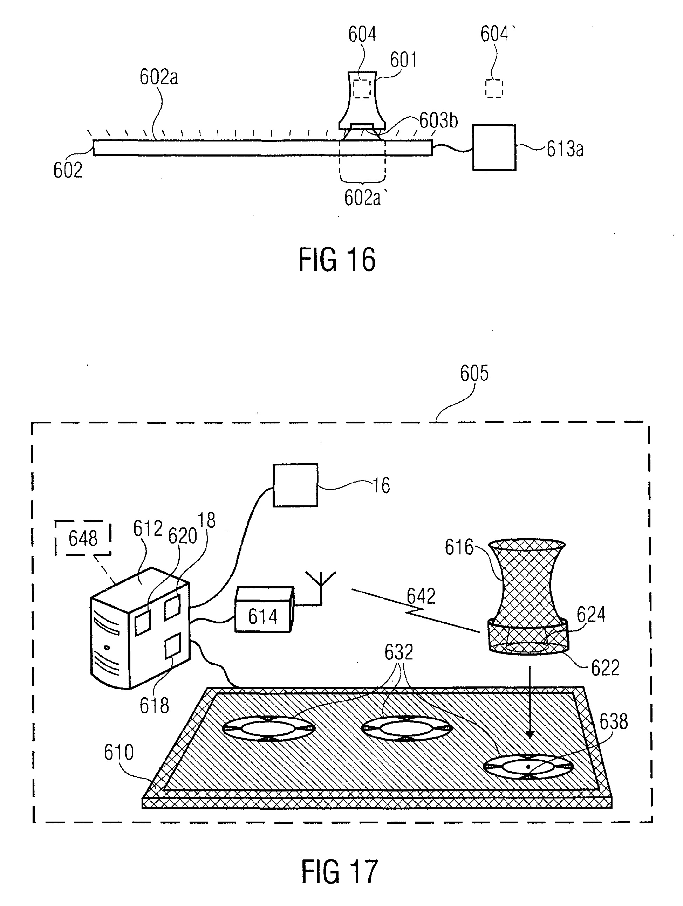

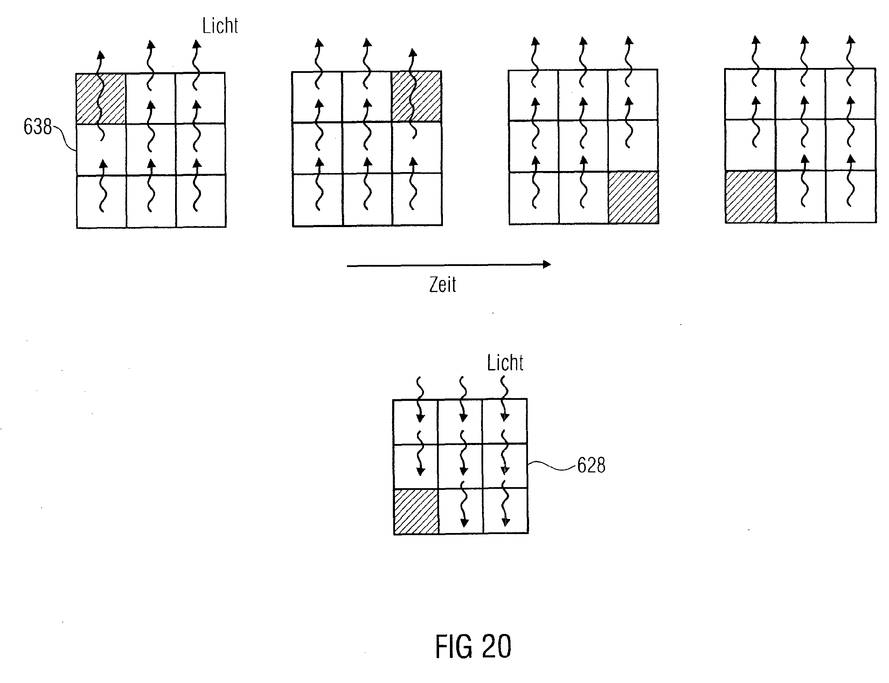

Fig. 1 zeigt recht allgemein ein System zur Bewegung eines Objekts 10 über eine Oberfläche 12. Es umfasst eine Lagebestimmungseinrichtung 14, die in der Lage ist, die Lage des Objekts 10 auf der Oberfläche 12 zu bestimmen, wie z.B. die laterale Position z.B. des Schwerpunkts und/oder die laterale Blickrichtung bzw. Verdrehung des Objekts um eine Flächennormalen der Oberfläche 12 gegenüber einer Referenzrichtung. Für die Lagebestimmungseinrichtung 14 werden im Folgenden Bezug nehmend auf die Fig. 16 bis 25 Ausführungsbeispiele beschrieben, wonach die Lagebestimmungseinrichtung 14 einen optischen Sensor in dem Objekt 10 sowie eine Anzeige aufweist, die ihre Bildschirmanzeige von der Rückseite der Oberfläche 12 her durch die Oberfläche 12 in Richtung der Vorderseite, auf der das Objekt 12 steht, anzeigt. Andere Lagebestimmungseinrichtungen 14 sind allerdings ebenfalls möglich und umfassen beispielsweise eine Kamera (nicht gezeigt), die die Transportoberfläche 12 von der Vorderseite aus, d.h. in Fig. 1 betrachtet von oben aus, aufnimmt, oder sonstige beispielsweise berührungslos arbeitende Abstandssensoren, wie z.B. zwei oder mehr Abstandssensoren, die entlang eines Rands der Transportoberfläche 12 angeordnet sind.

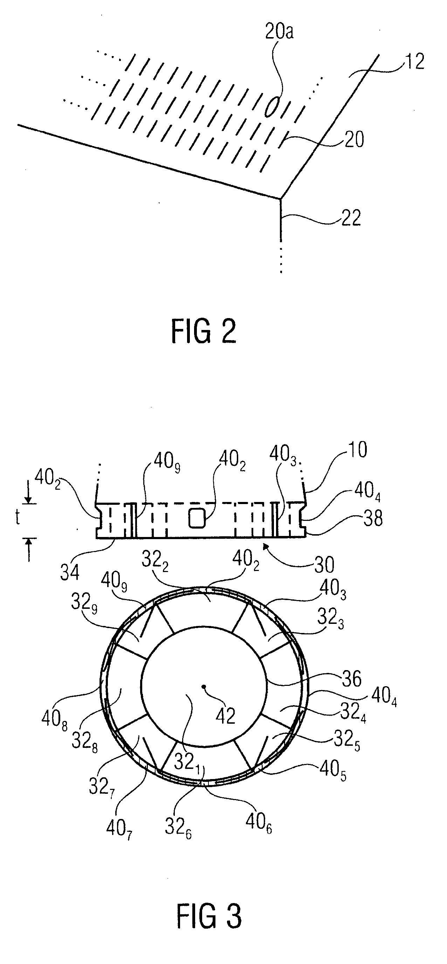

Das System von Fig. 1 umfasst ferner eine Einrichtung zum Bewegen des Objekts über die Oberfläche, nämlich die Einrichtung 16. Die Einrichtung 16 führt also die tatsächliche Bewegung aus, ohne Benutzerinteraktion. Für die Bewegungseinrichtung 16 werden im Folgenden vor allem Bezug nehmend auf die Fig. 2 bis 16 verschiedene Beispiele beschrieben. Gemäß diesen Ausführungsbeispielen ist die Bewegungseinrichtung 16 derart ausgebildet, dass die Kräfte, um die Lage 10 des Objekts auf der Oberfläche 12 zu verändern, berührungslos auf das Objekt 10 ausgeübt werden, wie mittels Biegewellen, wobei aber Kombinationen mit anderen Mechanismen ebenfalls möglich sind, worauf auch im Folgenden noch hingewiesen wird.

Die Lagebestimmungseinrichtung 14 und die Bewegungseinrichtung 16 sind miteinander gekoppelt. Insbesondere können die Lagebestimmungseinrichtung 14 und die Bewegungseinrichtung 16 beispielsweise über eine Ansteuereinrichtung 18 miteinander gekoppelt sein. Die Ansteuereinrichtung 18 umfasst beispielsweise einen Prozessor, der ein geeignetes Programm ausführt. Insbesondere ist die Ansteuereinrichtung 18 ausgebildet, um auf Basis der von der Lagebestimmungseinrichtung 14 bestimmten Lage des Objekts 10 auf der Oberfläche 12 und einer vorbestimmten Soll-Lage des Objekts 10 auf der Oberfläche 12 die Bewegungseinrichtung 16 derart anzusteuern, dass sich das Objekt 10 der Soll-Lage annähert, wodurch eine Regelschleife entsteht, die dafür sorgt, dass das Objekt 10 seine Soll-Lage erreicht. Woher die Soll-Lage geliefert wird, kann je nach Anwendungsfall unterschiedlich sein. Die Soll-Lage kann der Ansteuereinrichtung 18 extern zur Verfügung gestellt werden. Die Ansteuereinrichtung 18 kann allerdings über ihre Funktion als Ansteuerung für die Bewegungseinrichtung 16 hinaus auch weitere Funktionen erfüllen, die die Soll-Lage des Objekts 10 beeinflussen. Beispielsweise fungiert die Ansteuereinrichtung 18 auch als Spielecomputer, der entweder in der Lage ist, über bestimmte Eingabevorrichtungen Soll-Lage-Änderungen des Objekts 10 manuell von einem Spieler zu empfangen und/oder Soll-Lage-Änderungen des Objekts 10 selbstständig zu berechnen. Geeignete Eingabeeinrichtungen sehen beispielsweise eine Tastatur, eine Maus, eine Spracheingabe, eine Touch-Screen-Fähigkeit der Oberfläche 12 oder dergleichen vor. Wie bereits erwähnt, sind aber auch andere Anwendungsfälle denkbar, in denen das System nach Fig. 1 eingesetzt werden kann, wie z.B. logistische Anwendungen, in welchem Fall die Ansteuereinrichtung 18 beispielsweise gleichzeitig logistische Aufgaben übernimmt, um unter anderem auch die Soll-Lage des Objekts 10 zu berechnen.

Obwohl es im Folgenden auch noch mehrmals angesprochen wird, wird darauf hingewiesen, dass es möglich ist, dass die Lagebestimmungseinrichtung 14 sowie die Bewegungseinrichtung 16 so ausgebildet sind, dass sie in der Lage sind, mehrere Objekte 10 und 10' auf der Oberfläche 12 individuell zu handhaben, d.h. ihre jeweilige Lage zu bestimmen bzw. sie individuell zu bewegen relativ zu den anderen Objekten. Dementsprechend kann die Ansteuereinrichtung 18 derart ausgebildet sein, dass sie die Soll-Lagen dieser mehreren Objekten 10 und 10' verwaltet oder zumindest die Regelungen ihrer Soll-Lagen durchführt.

Bezug nehmend auf die Fig. 2 - 8 werden nun im Folgenden Vergleichsbeispiele beschrieben, wonach die Einrichtung 16 zum Bewegen des Objekts über die Oberfläche ein Luftkissen zwischen Objekt und Transportoberfläche erzeugt, so dass die üblicherweise auftretende Haft- und Gleitreibung des Objekts zwischen Boden des Objekts und Transportoberfläche zugunsten einer bedeutend geringeren Reibung aufgrund des Luftkissens überwunden wird.

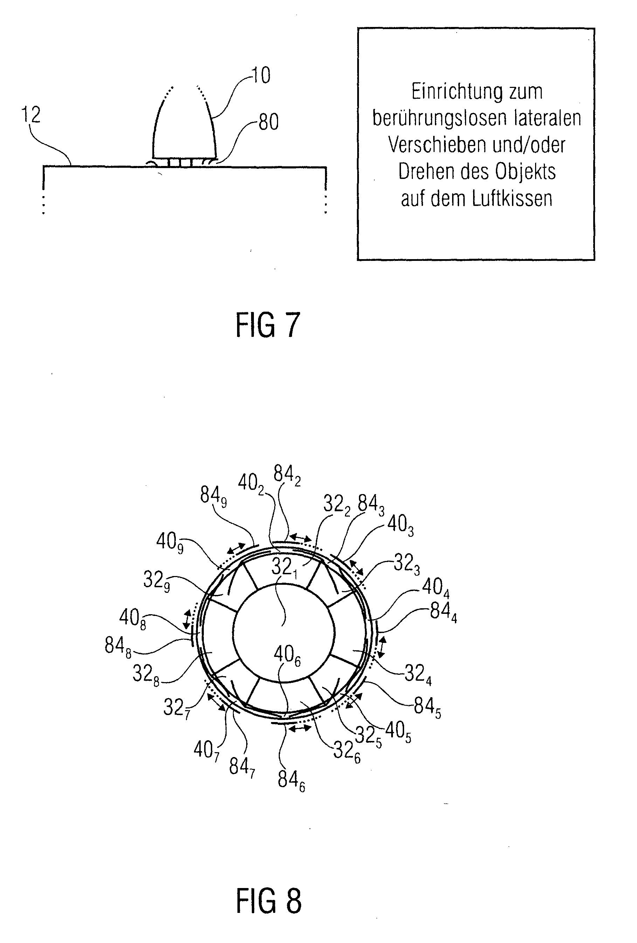

Fig. 2 zeigt exemplarisch die Oberfläche 12, d.h. die Transportoberfläche, mit einem Array bzw. mit einer lateralen Verteilung von Luftdüsen 20. In Fig. 2 ist die laterale Verteilung als eine regelmäßige laterale Verteilung in Spalten und Zeilen dargestellt. Andere regelmäßige Anordnungen sowie unregelmäßige laterale Verteilungen der Luftdüsen 20 sind aber ebenfalls möglich. Zudem sind die Luftdüsen 20 in Fig. 2 exemplarisch als individuell ansteuerbar bzw. individuell schließbar/öffenbar dargestellt, indem bis auf eine Öffnung 20a alle Öffnungen in einem geschlossenen Zustand dargestellt sind. Wie später in Bezug auf Fig. 7 beschrieben wird, ist es aber ebenfalls möglich, dass die Bewegungseinrichtung 16 ständig geöffnete oder nur zusammen ansteuerbare Luftdüsen 20 verwendet. Zudem sind die Lüftdüsen so dargestellt, als seien sie am Luftaustrittsort schließ- und öffenbar, d.h. als Luftventile. Allerdings ist es ebenfalls möglich, die Luftdüsen dadurch individuell ansteuerbar zu machen, dass sich Ventile in den Luftventilen individuell zugeordneten Luftkanälen befinden, die die Luftdüsen mit einer Druckquelle verbinden.

In Fig. 2 ist die Transportoberfläche 12 exemplarisch als eine Hauptseite eines parallelepipedförmigen Körpers dargestellt worden, wie z.B. einer Düsenplatte 22, deren Vorderseite die Transportoberfläche 12 bildet und die Luftdüsen 20 aufweist. Andere Formen sind allerdings ebenfalls möglich.

Obwohl es in Fig. 2 nicht explizit dargestellt ist, stehen die Luftdüsen 20 natürlich mit einer Druckquelle fluidisch in Verbindung, so dass in dem geöffneten Zustand der Luftdüsen, wie es bei 20a dargestellt ist, Druckluft aus der Düse strömt. Die Druckluft verlässt die Düse 20 beispielsweise entlang einer Flächennormalen der Transportoberfläche 12. Die Düsen können allerdings auch so gestaltet sein, dass die Luft die Düse 20 in einer Richtung verlässt, die gegenüber der Flächennormalen geneigt ist. Die laterale Verkippungsrichtung, d.h. tangential zur Oberfläche 12, kann dabei beispielsweise für die unterschiedlichen Luftdüsen 20 unterschiedlich sein, worauf im Folgenden noch einmal eingegangen wird.

Bezug nehmend auf die Fig. 3 bis 6b wird nun ein Vergleichsbeispiel beschrieben, bei dem ein Array von individuell ansteuerbaren Luftdüsen in Kombination mit einem Objekt, dessen Boden entsprechend ausgestaltet ist, dazu verwendet wird, die laterale Bewegung des Objekts auf der Oberfläche zu erzeugen. Fig. 3 zeigt exemplarisch eine Möglichkeit zur Ausgestaltung des Bodens des Objekts 10. Im oberen Teil der Fig. 3 ist die zugehörige Seitenansicht des Objekts 10 des leichteren Verständnisses halber dargestellt.

Wie es in Fig. 3 zu sehen ist, sind in dem Boden 30 des Objekts 10 mehrere Ausnehmungen 32₁ - 32₉ gebildet. Ansonsten ist der Boden 30 eben, d.h. er weist eine ebene Auflagefläche 34 auf. Wie es in Fig. 3 exemplarisch dargestellt ist, können die Vertiefungen bzw. Ausnehmungen 32₁ - 32₉ eine gemeinsame Tiefe t aufweisen, bis zu der sie sich von der Auflagefläche 34 aus in das Innere des Objekts 10 erstrecken. Wie es in Fig. 3 gezeigt ist, sind die Ausnehmungen 32₁ - 32₉ durch exemplarisch senkrecht zur Auflagefläche 34 verlaufende Innenwände 36 getrennt. Ferner existieren unter den Ausnehmungen solche, nämlich die Ausnehmungen 32₂ - 32₉, die an eine äußere Seitenwand 38 des Objekts 10 angrenzen. In dem exemplarischen Fall von Fig. 3 ist in der Seitenwand 38 für jede der Ausnehmungen 32₂ - 32₈ eine Öffnung 40₂ - 40₉ vorgesehen, die es ermöglicht, dass aus der entsprechenden Ausnehmung 32₂ - 32₉ Luft, die das Luftkissen unter dem Objekt 10 bildet, seitlich ausströmen kann. Im 90°-Winkel zueinander sind beispielsweise Öffnungen 40₂, 40₄, 40₆ und 40₈ vorgesehen, die dazu vorgesehen sind, Luft radial von dem in Fig. 3 exemplarisch rotationssymmetrisch um eine Rotationsachse 42 geformten Objekt 10 ausströmen zu lassen. Um 45° versetzt hierzu sind im 90°-Winkel zueinander vier Öffnungen 40₃, 40₅, 40₇ und 40₉ vorgesehen, um Luft aus den entsprechenden Ausnehmungen bzw. Kammern 32₃, 32₅, 32₇ und 32₉ in Richtungen ausströmen zu lassen, die eine tangentiale Komponente aufweisen. Insbesondere sind diese Öffnungen paarweise so ausgestaltet, dass ein gegenüberliegendes Paar von Öffnungen 40₃ und 40₇ bzw. 40₅ und 40₉ die Luft in gleicher Drehrichtung, d.h. gegen den Uhrzeigersinn von oben aus betrachtet bzw. mit dem Uhrzeigersinn von oben aus betrachtet, ausströmen lässt.

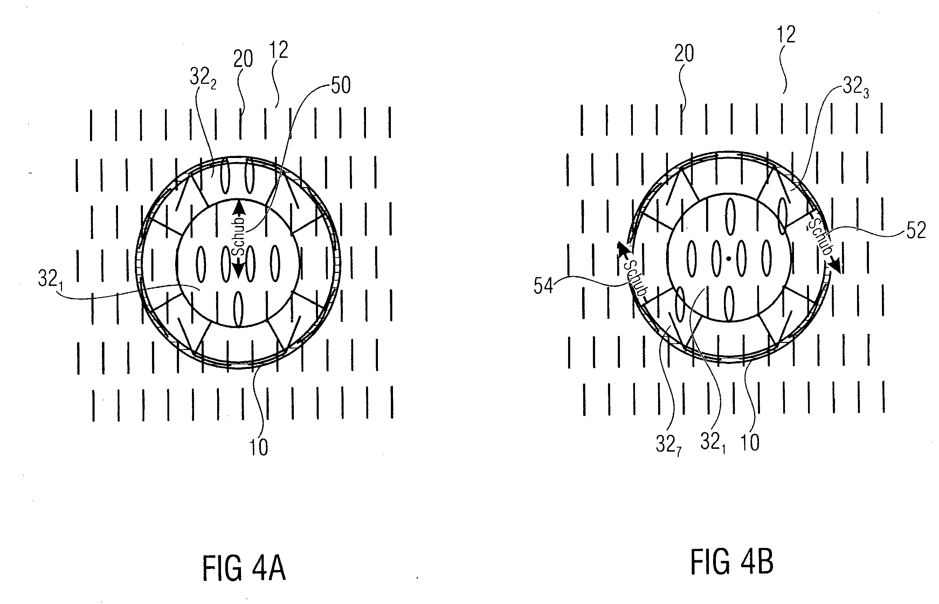

Wie es nun Bezug nehmend auf Fig. 4a und 4b noch exemplarisch veranschaulicht wird, ist es aufgrund der Ausgestaltung der Ausnehmungen und den durch dieselben gebildeten Kammern möglich, durch geeignete Auswahl einer Teilmenge dieser Kammern, die Druckluft aus den Luftdüsen erhalten sollen, das Objekt 10 auf der Oberfläche zu drehen und/oder in eine gewünschte Richtung zu bewegen, d.h. jedwede Mischung aus translatorischer Bewegung und Drehung um die Achse 42 zu bewirken. So bewirkt Druckluft in der Kammer 32₂ durch die seitlich durch die Öffnung 40₂ ausströmende Luft, dass sich das Objekt 42 in die der seitlich ausströmenden Luft entgegengesetzte Richtung bewegt. Das gilt für die Öffnungen 40₄, 40₆ und 40₈ in entsprechender Weise. Strömt Druckluft in die Kammern 40₃ und 40₇ gleichzeitig ein, so bewirkt die austretende Luft in den entsprechenden Öffnungen eine Drehung des Objekts im Uhrzeigersinn (bei Betrachtung in Fig. 3). Eine entsprechend umgekehrte Drehung wird durch Leitung von Druckluft in die Kammern 32₉ und 32₅ erreicht. Die allseitig durch Wände - in Fig. 3 die Innenwände 36 - umschlossene Kammer 32₁ bewirkt bei Befüllung mit Druckluft keine lateralen Kräfte auf das Objekt 10 und kann somit mit Druckluft befüllt werden, um das Objekt 10 vermittels des entsprechenden Luftkissens zwischen Objekt 10 und Oberfläche zu tragen.

Das Zusammenspiel zwischen der Ansteuereinrichtung 18, den individuell ansteuerbaren Luftdüsen 20 und der speziellen Ausgestaltung des Bodens 30 des Objekts 10 soll im Folgenden noch einmal anhand der Fig. 4a und 4b veranschaulicht werden. Fig. 4 zeigt einen Ausschnitt aus der Transportoberfläche 12 und den individuell ansteuerbaren Luftventilen 20. Die in Fig. 4a angedeutete Lage des Objekts 10 auf der Oberfläche 12 ist der Ansteuereinrichtung 18 über die Lagebestimmungseinrichtung 14 bekannt. In Fig. 4a wird angenommen, dass es die Soll-Lage vorsieht, das das Objekt 10 in Richtung Süden (in Fig. 4a unten) verschoben werden soll. Dementsprechend aktiviert bzw. öffnet die Ansteuereinrichtung 18 neben den Luftventilen 20, die sich unterhalb bzw. lateral ausgerichtet zu der zentralen Luftkammer 32₁ befinden, diejenigen Luftöffnungen 20, die zu der im Norden befindlichen Luftkammer 32₂ ausgerichtet sind, so dass die durch die entsprechende Öffnung dieser Kammer 32₂ seitlich ausströmende Luft das Objekt 10, das von dem Luftkissen getragen wird, das durch die geöffneten Luftdüsen 20 erzeugt wird, in die gewünschte Richtung verschoben wird, wie es durch einen Pfeil 50 angedeutet ist. In Fig. 4a sind die geöffneten Luftventile mit einem Oval angedeutet und die geschlossenen Luftventile mit einem Strich.

Fig. 4b zeigt dieselbe Ausgangsposition wie die Fig. 4a. In diesem Fall allerdings wird angenommen, dass die Ansteuereinrichtung 18 zur Annäherung des Objekts 10 an die Soll-Lage das Objekt 10 drehen muss, nämlich im Uhrzeigersinn. Dementsprechend öffnet sie neben den Luftventilen 20, die ihre Luft in die zentrale Kammer 32₁ blasen, diejenigen Luftventile 20, die den einander gegenüberliegenden Luftkammern 32₃ und 32₇ gegenüberliegen. Die seitlich aus der Kammer 32₃ ausströmende Luft erzeugt einen Schub 52 in tangentialer Richtung, die der Richtung des Schubs 54 entgegengesetzt ist, der durch die seitlich aus der gegenüberliegenden Luftkammer 32₇ ausströmende Luft entsteht, wodurch die gewünschte Drehbewegung des Objekts 10 im Uhrzeigersinn erzielt wird.

Es sei darauf hingewiesen, dass die spezielle Ausgestaltung des Bodens gemäß Fig. 3 lediglich exemplarisch ist. Viele Abwandlungen sind möglich. Kommt es beispielsweise auf Drehbewegungen des Objekts 10 nicht an, so weist das Objekt 10 beispielsweise lediglich drei Öffnungen auf, die die Luft radial ausströmen lassen und beispielsweise in 120°-Winkeln zueinander angeordnet sind. Ist die Bahn des Objekts 10 beispielsweise anderweitig auf der Oberfläche 12 festgelegt, wie z.B. durch entsprechende Banden, dann reicht gegebenenfalls auch lediglich das Vorsehen einer seitlichen Ausnehmung mit einer entsprechenden Öffnung in der Seitenwand 38 neben einer weiteren Ausnehmung bzw. Kammer aus, die wie die Kammer 32₁ keine seitliche Öffnung in der Seitenwand aufweist.

In der vorhergehenden Beschreibung der Fig. 2 - 4b sind die Luftdüsen 20 auch manchmal als Luftventile bezeichnet worden. Das liegt daran, dass das individuelle Ansteuern der Luftdüsen entweder direkt an der Luftdüse stattfinden kann, in welchem Fall dieselbe als Luftventil wirkt, oder jeder Luftdüse, die dann ständig geöffnet ist, ein Ventil zugeordnet sein kann, über die die jeweilige Luftdüse individuell ansteuerbar ist. Jedem Paar einer solchen Luftdüse und zugeordneten Ventils wäre dann ein entsprechender Luftkanal eigens zugeordnet, was natürlich erheblichen Platz erfordert.

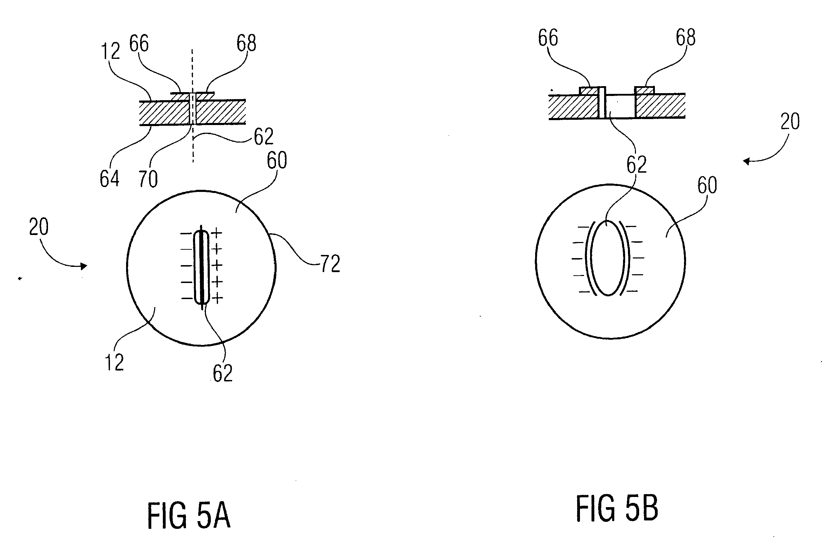

Die Fig. 5a und 5b zeigen ein Beispiel eines geschlossenen und geöffneten Zustands eines Luftventils 20. Gemäß Fig. 5a und 5b sind die Luftventile aus Silikon 60 gebildet. Beispielsweise besteht der ganze Körper 22 (Fig. 2) aus Silikon oder aber ein Grundträger, wie z.B. eine Glasplatte, besitzt eine Matrix von Löchern, die z.B. in die Glasplatte gebohrt worden sind, und in diese Löcher werden die einzelnen Silikonventile gemäß Fig. 5a und 5b eingepasst. Beispielsweise besitzt das Material 60 des Ventils, wie z.B. eben Silikon, einen Brechungsindex, der gleich dem Brechungsindex des Materials der Trägerplatte ist, d.h. Beispielsweise Glas, in welchem Fall sich beispielsweise ein vollständig transparentes Erscheinungsbild durch die Oberfläche 12 hindurch ergibt. Der Brechungsindex kann beispielsweise 1,43 sein. In dem vorzugsweise elastischen Ventilmaterial 60 ist beispielsweise ein Schlitz 62 vorgesehen, der von der Oberfläche 12 hindurch zu der gegenüberliegenden Seite 64, an der beispielsweise Druckluft anlegbar ist, verläuft. Der Schlitz ist beispielsweise in das elastische Material 60 hinein geschnitten worden.

Seitlich entlang des Schlitzes sind Elektroden 66 und 68 vorgesehen, an die unterschiedliches Potential anlegbar ist. Eine Innenbeschichtung 70 in dem Schlitz 62 sorgt dafür, dass in dem geschlossenen Zustand, der in Fig. 5a dargestellt ist, die Elektroden 66 und 68 einander nicht berühren. Natürlich kann eine solche Innenbeschichtung 70 auch fehlen, wenn die Elektroden 66 und 68 so von dem Schlitz 62 beabstandet sind, dass auch in dem geschlossenen Zustand dieselben einander nicht berühren.

In dem Fall von Fig. 5a sorgt nun die Ansteuereinrichtung 18 exemplarisch dafür, dass das Luftventil aus Fig. 5a geschlossen ist. Dazu wird unterschiedliches elektrisches Potential an die Elektroden 66 und 68 angelegt. In Fig. 5b ist der Fall dargestellt, dass die Elektroden 66 und 68 mit Ladungsträgern gleicher Polarität geladen werden. Nach Fig. 5a und 5b sind somit die Elektroden 66 und 68 eines Luftventils mit zwei verschiedenen Spannungsquellen koppelbar, von denen die Elektroden 66 und 68 jeweils mit dem gleichen Pol verbunden sind. In Fig. 5b ist dies exemplarisch der Minus-Pol. Die dadurch resultierende elektrostatische Abstoßungskraft zwischen den Elektroden 66 und 68 sorgt dafür, dass sich der Schlitz 62 zu einem Oval öffnet, wie es in Fig. 5b gezeigt ist.

Das Vergleichsbeispiel nach Fig. 5a und 5b ist natürlich nur exemplarisch und andere Ausgestaltungen sind ebenfalls möglich. Zudem ist die Fig. 5a und 5b der Einfachheit halber dahingehend vereinfacht dargestellt worden, dass die Zuleitungen zu den Elektroden 66 und 68 nicht dargestellt sind. Zur individuellen Ansteuerbarkeit der Luftventile müssen diese allerdings über jeweils eigene Leitungen mit den vorerwähnten Spannungsquellen verbindbar bzw. von denselben trennbar sein. Ferner wird auch darauf hingewiesen, dass in Fig. 5a und 5b die Linie 72 exemplarisch die mögliche Grenzfläche zwischen dem Ventilmaterial 60 und der vorerwähnten Trägerplatte, wie z.B. der Glasplatte, darstellen soll.

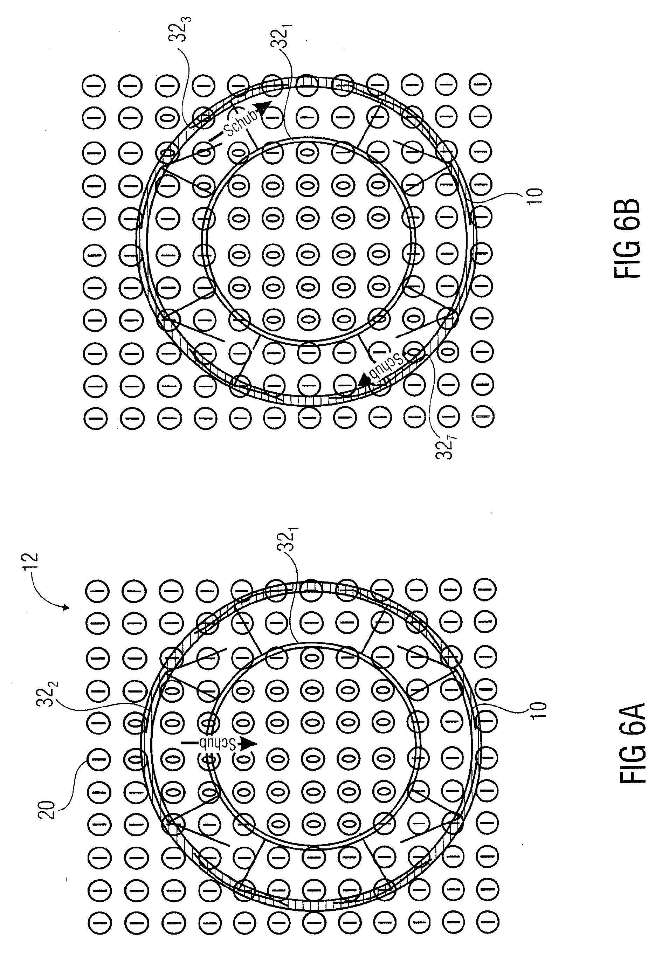

Fig. 6a und 6b zeigen angewandt auf die Luftventilausführung nach Fig. 5a und 5b die Ansteuerung einer Matrix von entsprechenden Luftventilen für die Erzeugung von Bewegungen, wie sie in Fig. 4a und 4b dargestellt sind. Kurzum, Fig. 6a und 6b zeigen einen Ausschnitt aus der Transportoberfläche 12, der exemplarisch mit einem Array von Ventilen 20 gemäß Fig. 5a und 5b versehen ist, wobei sich ein Objekt 10 auf der Oberfläche 12 befindet, das eine Bodengestaltung gemäß Fig. 3 aufweist. Wie es in Fig. 6a zu sehen ist, befinden sich die Luftventile 20, die unterhalb der Kammer 32₁ und 32₂ angeordnet sind, im geöffneten Zustand gemäß Fig. 5b, um die Bewegung in die Südrichtung zu erzielen, wie es in Fig. 4a der Fall war, und in Fig. 6b befinden sich lediglich diejenigen Luftventile in dem Zustand gemäß Fig. 5b, die unterhalb der Kammern 32₁, 32₃ und 32₇ angeordnet sind, während sich die jeweils anderen Luftventile in dem geschlossenen Zustand gemäß Fig. 5a befinden.

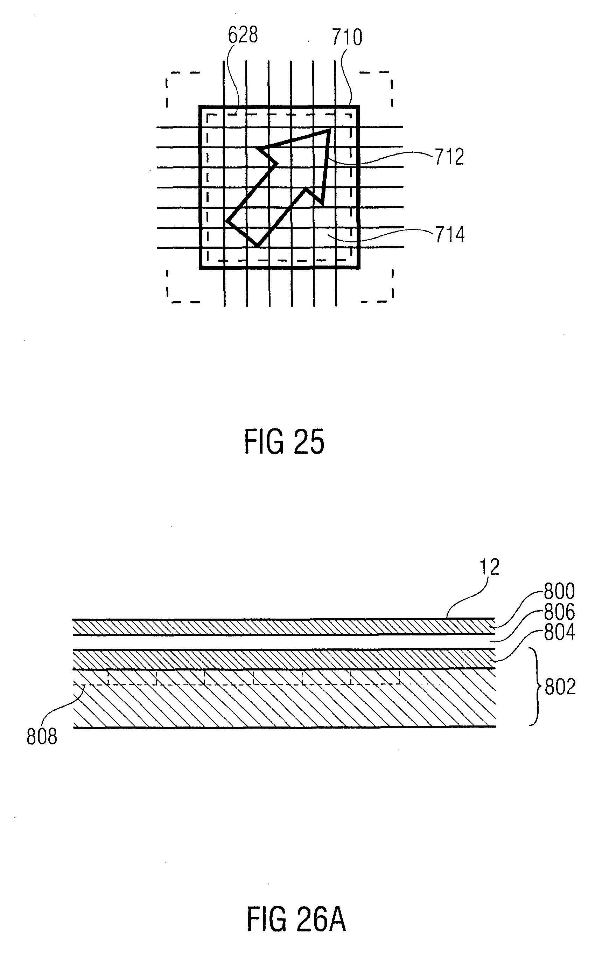

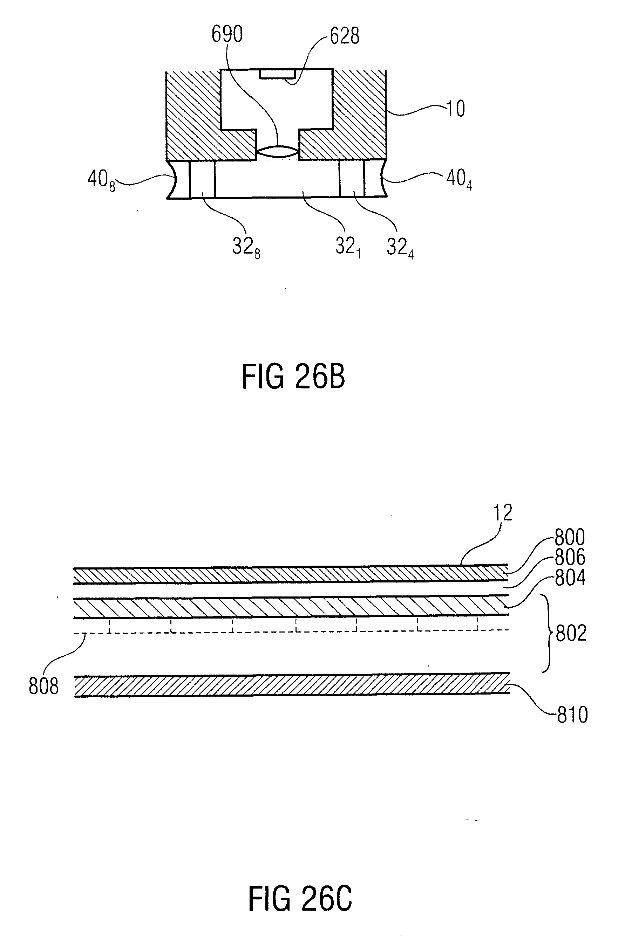

Wie später Bezug nehmend auf Fig. 26a und 26b noch beschrieben wird, besitzt die Ausgestaltung der Luftventile getragen von einer Glasplatte mit gleichem Brechungsindex, wie es Bezug nehmend in Fig. 5a - 6b beschrieben worden ist, den Vorzug, dass bei geschlossenen Luftventilen der Eindruck der Glasplatte nicht durch die Luftventile gestört wird. In anderen Worten ausgedrückt entstehen bei geschlossenen Luftventilen keine "Unstetigkeitsstellen", die die Transparenz der Platte beeinträchtigen würden, was insbesondere nach den Ausführungsbeispielen von Fig. 16 bis 25 vorteilhaft ist, wonach ja die Lagebestimmungseinrichtung 14 eine unterhalb der Transportoberfläche befindliche Anzeige verwendet, um die Lagebestimmung vorzunehmen.

Ein mittlerer kleinster Abstand zwischen den Luftdüsen 20 ist beispielsweise kleiner als eine laterale Ausdehnung der Ausnehmungen 32₂₋₉. Vorzugsweise ist ein mittlerer kleinster Abstand zwischen den Luftdüsen 20 kleiner oder gleich einer kleinsten lateralen Abmessung der Ausnehmungen 32₂₋₉. Abhängig von der Bewegung, die das Objekt aufgrund seines Versatzes von der Soll-Lage ausführen soll, wählt die Ansteuereinrichtung 18 dann diejenigen Düsen zum Blasen aus, die unterhalb der geeigneten Ausnehmungen 32₂₋₉ liegen.

In den Fig. 2 - 6b sind die lateralen Kräfte zur Lageveränderung des Objekts, das von dem Luftkissen getragen wird, durch die Druckluft zur Erzeugung des Luftkissens selbst erzeugt worden, indem entsprechende Luftkammern belüftet bzw. in entsprechende Luftkammern Luft geblasen wurde.

Fig. 7 zeigt eine Möglichkeit zur Ausgestaltung der Einrichtung 16 zum Bewegen des Objekts über die Oberfläche, wonach dieselbe ein Array aus individuell ansteuerbaren Luftdüsen in der Oberfläche 12 zur Erzeugung eines Luftkissens 80 zwischen Objekt 10 und Oberfläche 12 aufweist, und zwar gezielt am Ort des Objekts 10, sowie eine weitere Einrichtung 82 zum berührungslosen lateralen Verschieben und/oder Drehen des Objekts 10 auf dem Luftkissen 80. Die Einrichtung zum berührungslosen lateralen Verschieben 82 kann beispielsweise elektrostatische Kräfte, magnetische Kräfte oder eine Verkippung der Oberfläche 12 relativ zum Gravitationsfeld verwenden, um eine gewünschte Lageveränderung des Objekts 10 auf der Oberfläche 12 zu bewirken.

In dem Fall, dass lediglich ein Objekt 10 unter mehreren Objekten auf der Oberfläche 12 gezielt in seiner Lage verändert werden soll, ist die Einrichtung 82 nicht auf solche Implementierungen beschränkt, die in der Lage sind, gezielt auf das gewünschte Objekt 10 Einfluss zu nehmen. Vielmehr ermöglicht es die gezielte Erzeugung des Luftkissens 80 unter dem gewünschten Objekt 10, dass nur für dieses Objekt 10 die ansonsten zwischen Oberfläche 12 und Objekt 12 wirkende Haft- und Gleitreibung aufgehoben wird, so dass die lateralen Kräfte durch die Einrichtung 82 nur für das gewünschte Objekt 10 zu einer lateralen Bewegung führt.

Eine Möglichkeit zur Implementierung der Einrichtung 82 sieht dabei beispielsweise vor, dass das Objekt 10 nicht über die Erzeugung von entsprechenden Feldern bewegt wird, sondern dass die seitlichen Öffnungen in den Bodenkammern in dem Fall von Fig. 3 selektiv geöffnet und geschlossen werden. Zusätzlich zu der Ausgestaltung nach Fig. 3 sind in dem Fall von Fig. 8 also Einrichtungen 84₂₋₉ zum selektiven Öffnen und Verschließen der Öffnungen 40₂ - 40₉ vorgesehen, die beispielsweise über eine drahtlose Schnittstelle durch die Ansteuereinrichtung 18 ansteuerbar sind. Entsprechend der vorhergehenden Beschreibung steuert die Ansteuereinrichtung 18 die Einrichtungen 84 so an, dass Luft nur durch die gewünschten Öffnungen 40₂ - 40₉ seitlich entweichen kann, die ansonsten das Luftkissen 80 bildet.

Bei der Alternative gemäß Fig. 8 wird darauf hingewiesen, dass in dem Fall der Verwendung von den Öffnungen jeweils zugeordneten Einrichtungen zum selektiven Verschließen und Öffnen der Öffnungen auch die Verwendung von Luftdüsen möglich wäre, die nur gemeinsam ansteuerbar oder überhaupt nicht ansteuerbar, sondern ständig geöffnet sind. Befänden sich in diesem Fall mehrere Objekte 10 auf der Oberfläche 12, so könnte bei Objekten, die ihre Lage nicht verändern sollen, der Satz von Einrichtungen 84₂ - 84₉ so angesteuert werden, dass alle die entsprechenden Öffnungen verschließen, so dass das entsprechende Luftkissen unterhalb derselben lediglich tragend wirkt. Lediglich bei demjenigen Objekt oder denjenigen Objekten, die bewegt werden sollen, sind eine oder mehrere der Öffnungen durch die Einrichtungen 84₂ - 84₉ geöffnet.

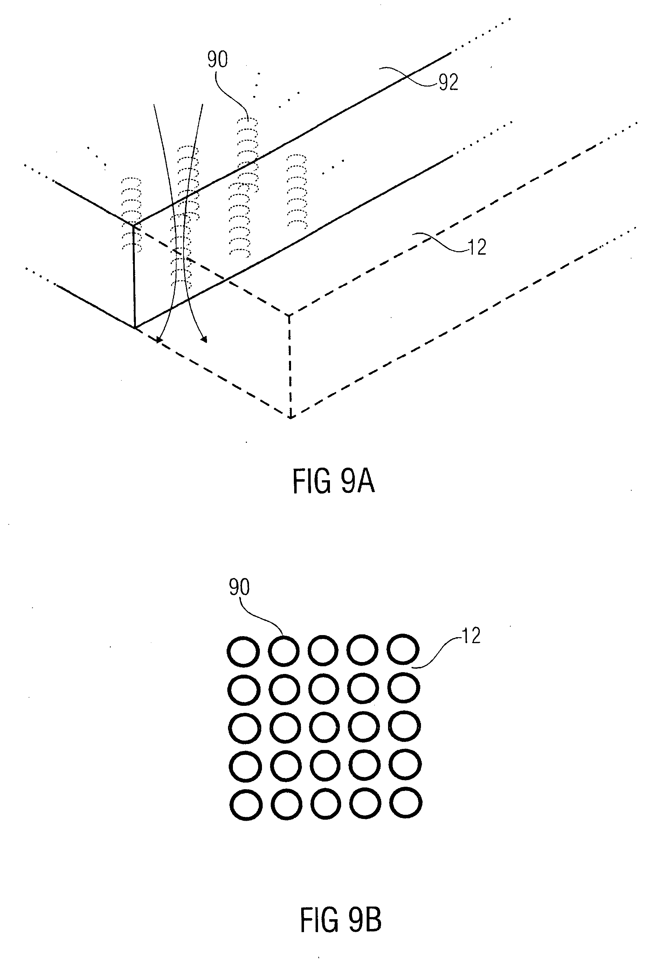

Während den im Vorhergehenden beschriebenen Vergleichsbeispielen, die Bezug nehmend auf die Fig. 2 bis 8 beschrieben worden sind, gemeinsam war, dass ein Luftkissen zwischen Objekt und Transportoberfläche erzeugt wird, stellt dies für die nachfolgend Bezug nehmend auf die Fig. 9a - 13b lediglich eine optionale Maßnahme dar. Gemäß den nachfolgend beschriebenen Vergleichsbeispielen wird die Lageveränderung des Objekts auf der Oberfläche durch geeignete Ansteuerung einer lateralen Verteilung von individuell ansteuerbaren Magnetspulen erzeugt, die entlang der Transportoberfläche verteilt angeordnet sind.

Fig. 9a und 9b zeigen exemplarisch die Transportoberfläche 12, entlang der ein Array von Magnetspulen 90 so angeordnet ist, dass der durch einen Stromfluss durch diese Magnetspule 90 erzeugte Magnetfluss im Wesentlichen symmetrisch zu einer Achse verläuft, die senkrecht zur Oberfläche 12 steht. In anderen Worten ausgedrückt, verläuft eine Längsachse der Magnetspulen 90 senkrecht zur Oberfläche 12. Wie es in Fig. 9a angedeutet ist, sind die Magnetspulen 90 beispielsweise in einem Trägermaterial 92 eingebettet, das beispielsweise aus magnetisch permeablem Material besteht. Die individuelle Ansteuerbarkeit der Magnetspulen 90 wird durch entsprechende Leitungen und Schalter bewerkstelligt, die in Fig. 9a und 9b zur Vereinfachung der Darstellung nicht gezeigt sind und es ermöglichen, dass für die einzelnen Magnetspulen 90 einzeln ein Stromfluss durch dieselben erzeugt werden kann.

Es kann sein, dass die Magnetspulen 90 entweder nur in zwei Zustände versetzbar sind, wie z.B. einen stromdurchflossenen und einen nicht-stromdurchflossenen Zustand oder einen mit Wechselstrom beaufschlagtem Zustand und einen stromlosen Zustand, oder in drei Zustände, nämlich einen stromlosen Zustand und zwei weitere Zustände, die sich in der Stromflussrichtung unterscheiden. Kombinationen dieser Ansteuerbarkeiten sind eventuell ebenfalls möglich, wie z.B. durch das Vorsehen einer individuellen bzw. selektiven Verbindbarkeit der Magnetspulen 90 mit einer Spannungsquelle, die wiederum für alle Magnetspulen 90 gleich je nach Einstellung durch die Ansteuereinrichtung 18 Wechselstrom, Gleichspannung in die eine oder Gleichspannung in die andere Richtung liefert.

Indem die Einrichtung 16 zur Bewegung des Objekts über die Oberfläche (Fig. 1) eine Verteilung von individuell ansteuerbaren Magnetspulen 90 aufweist, ist es der Ansteuereinrichtung 18 möglich, das Objekt 10 von der durch die Lagebestimmungseinrichtung 14 erhaltenen Ist-Lage in eine Soll-Lage zu versetzen. Dazu kann das Objekt 10 selbst entweder aus magnetisch anziehbaren und/oder abstoßbaren Material, wie z.B. Eisen, bestehen, oder das Objekt ist lokal mit einem oder mehreren solchen magnetisch anziehbaren und/oder magnetisch abstoßbaren Elementen in einem ansonsten magnetisch permeablen Material versehen.

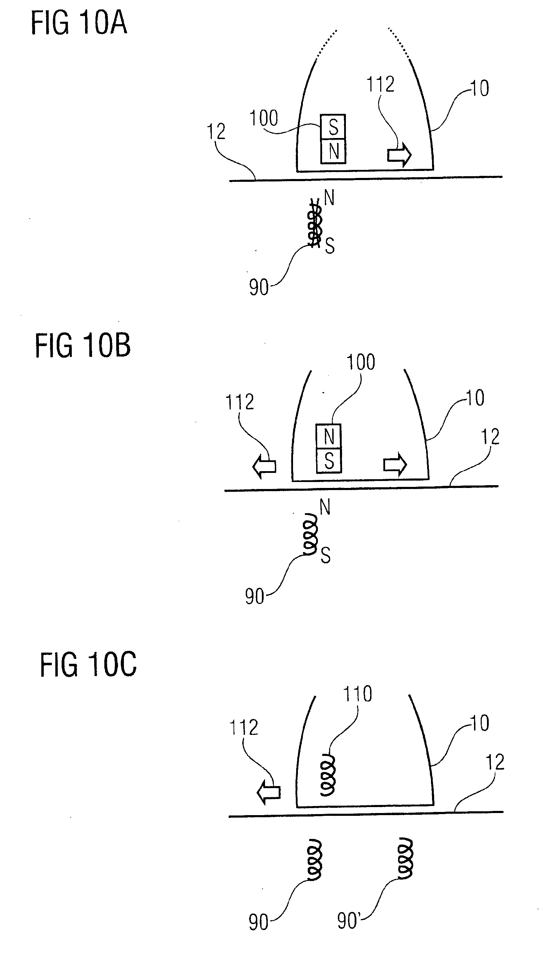

Die Fig. 10a - 10c zeigen Vergleichsbeispiele, bei denen das Objekt 10 aus einem ansonsten magnetisch permeablen Material gefertigt ist, wobei jedoch in der Gegend des Bodens des Objekts 10 ein magnetisch anziehbares und/oder magnetisch abstoßbares Element angeordnet ist, wie z. B. eingegossen in das magnetisch permeable Material. Das magnetisch permeable Material kann beispielsweise Kunststoff sein. Gemäß Fig. 10a und 10b ist das Element 100 beispielsweise ein Permanentmagnet. Gemäß dem Vergleichsbeispiel von Fig. 10c ist das Element beispielsweise eine Spule 110. Wie es im Folgenden noch beschrieben werden wird, können in einem Objekt natürlich mehrere Elemente 100 bzw. 110 an lateral unterschiedlichen Stellen entlang der Auflagefläche des Objekts 10 angeordnet sein. In dem Fall von Fig. 10a und 10b sind die Magnetpole des Permanentmagneten 100 exemplarisch entlang einer Flächennormalen der Transportoberfläche 12 angeordnet, in dem Fall von Fig. 10c die Spulenachse entlang der Flächennormalen.

Fig. 10a zeigt exemplarisch, wie die Ansteuereinrichtung 18 eine magnetische Abstoßungskraft dazu ausnutzen kann, um das Objekt 10 entlang der Oberfläche 12 zu bewegen. Hierzu aktiviert die Ansteuereinrichtung 18 beispielsweise eine der Spulen 90 entlang der Oberfläche 12, so dass ihr magnetischer Nordpol dem Nordpol des Permanentmagneten 100 über die Oberfläche 12 zugewandt ist, und zwar diejenige Magnetspule 90 unter der Vielzahl von Magnetspulen, die relativ zu dem Ort des Permanentmagneten 100 in einer Richtung versetzt angeordnet ist, die der Richtung 112 entgegengesetzt ist, in die das Objekt 10 bewegt werden soll. Die magnetische Abstoßung zwischen dem Permanentmagneten 100 und der erregten Spule 90 bewirkt nämlich die Kraft in die gewünschte Richtung 112.

Umgekehrt ist es der Ansteuereinrichtung 18 möglich, eine Magnetspule 90, die in der gewünschten Verschieberichtung 112 versetzt zu dem Permanentmagneten 100 angeordnet ist, so anzusteuern, dass ihre magnetische Nord/Süd-Ausrichtung derjenigen des Permanentmagneten entspricht, so dass einander entgegengesetzte Pole der Spule 90 und des Permanentmagneten 100 einander über die Oberfläche 12 gegenüberliegen und die resultierende magnetische Anziehungskraft für eine laterale Verschiebung des Objekts 10 in die gewünschte Richtung 112 sorgt. In dem Fall von Fig. 10b erregt die Ansteuereinrichtung 19 diejenige Magnetspule 90 unter der Vielzahl von Magnetspulen, die relativ zu dem Ort des Permanentmagneten 100 in einer Richtung versetzt angeordnet ist, die der Richtung 112 gleichgerichtet ist, in die das Objekt 10 bewegt werden soll.

In dem Fall von Fig. 10c existieren unterschiedliche Ansteuermöglichkeiten. Gegebenenfalls ist in dem Objekt 10 eine in Fig. 10c nicht dargestellte Stromerzeugungseinrichtung, wie z.B. eine Batterie oder ein Akku, angeordnet, der einen Stromfluss in der Magnetspule 110 des Objekts 10 erzeugt, so dass letzterer wiederum in diesem Zustand wie einer der Permanentmagneten 100 wirkt. In diesem Fall kann die Ansteuereinrichtung 18 die Ansteuerung wie in Fig. 10a und 10b beschrieben durchführen.

Die Magnetspule 110 muss aber nicht extern durch beispielsweise eine Objekt-interne Batterie oder dergleichen angesteuert sein, um stromdurchflossen zu sein und sich somit wie ein Permanentmagnet zu verhalten. Die Magnetspule 110 könnte auch über einen zur Spule 110 parallelen Zweig an ihren Enden kurzgeschlossen oder über eine Impedanz elektrisch miteinander verbunden sein. In diesem Fall induziert ein sich durch die Erregerspule 90 im Aufbau oder Abbau befindliches Magnetfeld einen Strom durch die Magnetspule 110 des Objektes 10, der wiederum ein der Magnetfeldänderung entgegengesetztes Magnetfeld erzeugt, d.h. ein gegengerichtetes Magnetfeld in dem Fall eines größer werdenden durch die Erregerspulen 90 erzeugten Magnetfeldes und ein gleichgerichtetes Magnetfeld in dem Fall eines geringer werdenden durch die Erregerspule 90 erzeugten Magnetfeldes. Die Ansteuereinrichtung 18 kann diesen Effekt ausnutzen, indem sie diejenigen Magnetspulen 90', die in der der gewünschten Richtung 112 entgegengesetzten Richtung versetzt zu der Spule 110 angeordnet ist, so ansteuert, dass sie an der Spule 110 ein stärker werdendes Magnetfeld erzeugen, das aufgrund des induzierten Stromes in der Magnetspule 110 das Objekt 10 in die gewünschten Richtung 112 wegschiebt, und diejenigen Magnetspulen 90, die in der gewünschten Richtung 112 versetzt zu der Spule 110 angeordnet sind, so ansteuert, dass sie ein schwächer werdendes Magnetfeld erzeugen, das zu einer Anziehung der Magnetspule 110 und damit des Objektes 10 in Richtung 112 bewirkt. Die Ansteuereinrichtung kann dies beispielsweise derart bewerkstelligen, dass beispielsweise die Erregerspule 90 bzw. 90' unterhalb bzw. in der Gegend der Magnetspule 110 des Objektes 10 in Richtung 112 sequenziell so angesteuert werden, dass die Erregerspulen in Richtung 112 vor der Magnetspule 110 zunächst zu einer Zunahme des Magnetfeldes am Ort der Magnetspule 110 führen, woraufhin die Magnetspulen in Richtung 112 hinter der Magnetspule 110 zu einer Abnahme des Magnetfeldes am Ort der Magnetspule 110 führen. Anders als in den Vergleichsbeispielen von Fig. 10a und 10b schiebt somit der Erregungsort, an welchem die Erregungsspulen 90 durch die Ansteuereinrichtung 18 aktiviert werden, das Objekt 10 nicht vor sich her bzw. zieht es hinter sich her, sondern der Erregungsort durchläuft zyklisch die Stellfläche, auf der sich das Objekt 10 gerade befindet, in der gewünschten Richtung 112.

Ein Verschiebung über längere Strecken hinweg, d.h. mehr als einen Inter-Spulen-Abstand, bewirkt die Ansteuereinrichtung durch selektives Aktivieren der Spulen so, dass ein Ort, binnen dessen sich die aktivierten Spulen 90 befinden, dem aktuellen bzw. durch die Einrichtung 14 bestimmten Ort des Objekts 10, vorauseilt oder hinterhereilt, um - wie es soeben beschrieben wurde - das Objekt "hinter sich herzuziehen" bzw. "vor sich herzuschieben".

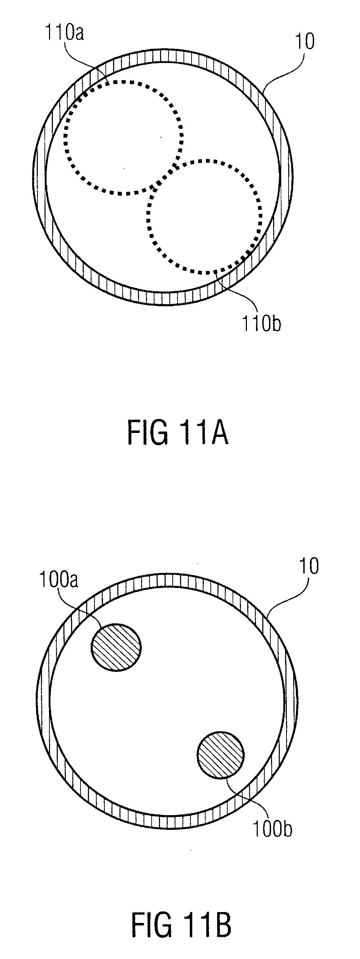

Fig. 11a und 11b zeigen noch einmal die Möglichkeit, das Objekt 10 mit versetzt zueinander angeordneten magnetisch anziehbaren und/oder magnetisch abstoßbaren Elementen in einem ansonsten magnetisch permeablen Material des Objekts 10 zu versehen. Insbesondere sind in dem Fall von Fig. 11a zwei Spulenwicklungen 110a und 110b lateral versetzt zueinander angeordnet, während in dem Fall von Fig. 11b in dem Sockel des Objekts 10 zwei versetzt zueinander angeordnete Permanentmagneten 100a und 100b vorgesehen sind, deren magnetische Nord- und Südpole exemplarisch gleich und entlang einer Flächennormalen einer Auflagefläche des Objekts 10 angeordnet sind. Die Längsachse der Spulen 110a und 110b verlaufen ebenfalls senkrecht zu einer Auflagefläche des Objekts 10.

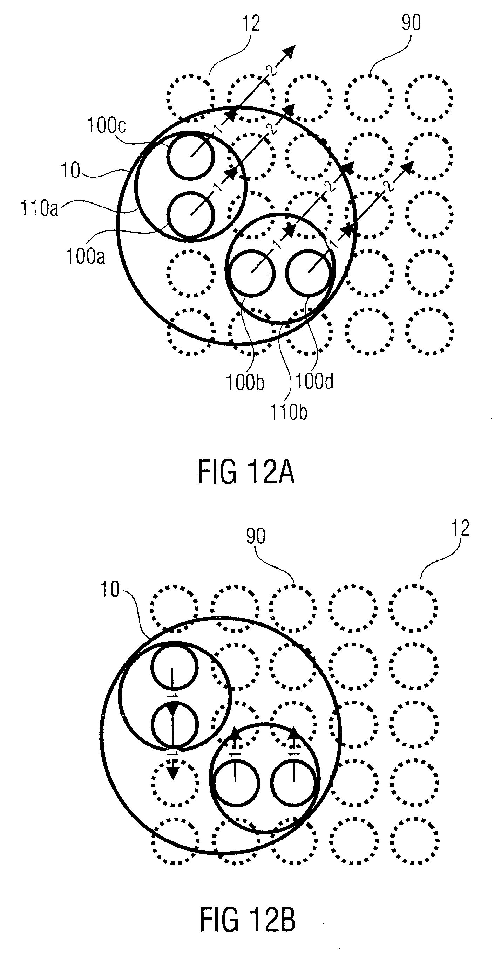

Fig. 12a und 12b sollen veranschaulichen, wie die Ansteuereinrichtung 18 eine translatorische Bewegung und eine Drehbewegung des Objekts 10 erzeugen kann, wenn das Objekt 10 gemäß Fig. 11a und Fig. 10c eine passive Magnetspule oder gemäß Fig. 11b Magneten aufweist, wobei magnetische Anziehungskraft zwischen diesem Magneten und den Magnetspulen des Arrays entlang der Oberfläche 12 ausgenutzt wird.

Fig. 12a zeigt das Objekt 10 in einer gewissen Ausgangslage, wobei die Ansteuereinrichtung 18 das Objekt 10 translatorisch in die Richtung der Pfeile bewegen möchte. Fig. 12a geht davon aus, dass das Objekt 10 entweder vier Permanentmagneten 100a - 100d aufweist, oder zwei Magnetspulen 110a und 110b. Der Abstand zwischen den Magnetspulen 110a und 110b bzw. zwischen den vier Permanentmagneten 100a - 100d ist so gewählt, dass er mit den Abständen der regelmäßig angeordneten Magnetspulen 90 korrespondiert. Beispielsweise sind die vier Permanentmagnete 100a - 100d exemplarisch so angeordnet, dass sie in der in Fig. 12a gezeigten Lage genau entsprechenden vier Magnetspulen 90 gegenüberliegen. Durch 90°-Drehung des Objekts 10 ergibt sich wieder eine solche Situation mit anderen Magnetspulen 90. Um nun die Bewegung in die gewünschte Richtung zu erzeugen, verlegt die Ansteuereinrichtung 18 wie durch die Pfeile und deren Nummerierung angedeutet, die Aktivierung der Magnetspulen 90 von denjenigen, die unterhalb der Permanentmagnete 100a - 100d bzw. den Spulen 110a und 110b angeordnet sind, zu denjenigen, die versetzt hierzu in der gewünschten Richtung angeordnet sind, d.h. es werden zunächst diejenigen Magnetspulen erregt, auf die die Pfeile mit der Nummer 1 zeigen, dann die, auf die die Pfeile mit der Nummer 2 zeigen usw. Die Erregung der entsprechenden Magnetspulen 90 richtet sich natürlich nach dem, ob es sich um ein Objekt 10 mit Spulen 110a und 110b oder Permanentmagneten 100a - 100b handelt, wobei je nachdem die Erregung das Anlegen einer Spannungsänderung an die entsprechenden Magnetspulen 90 oder das Anlegen einer Gleichspannung beinhaltet, wie es Bezug nehmend auf Fig. 10a - 10c beschrieben worden ist, d.h. genau genommen ziehen die Erregungsorte in dem Fall von Permanentmagneten in dem Objekt 10 das Objekt 10 einfach hinter sich her, während in dem Fall von Magnetspulen in dem Objekt 10 die Erregerspulen zeitlich so angesteuert werden, dass die Magnetfeldverringerung am Ort der Magnetspulen des Objektes 10 zu einer Anziehungskraft in der gewünschten Richtung (rechts oben, Fig. 12a) führt. Dabei sind im letztgenannten Fall bereits zeitlich vorher die in der beabsichtigten Bewegungsrichtung weiter vorne liegenden Erregerspulen 90 beispielsweise bereits so angesteuert worden, dass sich am Ort der Magnetspulen des Objektes 10 eine Magnetfeldverstärkung ergab, die zu einer Abstoßungskraft in der gewünschten Richtung (rechts oben, Fig. 12a) führte.

In Fig. 12b ist die gleiche Ausgangsposition wie in Fig. 12a dargestellt, wobei jedoch die Ansteuereinrichtung 18 zum Verlassen dieser Ausgangsposition und zum Erzielen einer Drehbewegung des Objekts 10 andere Magnetspulen 90 erregt. Wie die Erregung von den derzeit erregten Magnetspulen auf das nächste Mal verändert wird, ist in Fig. 12b wieder durch Pfeile mit einer Nummer 1 angedeutet. Wie es zu sehen ist, ergibt sich eine Drehbewegung entgegen des Uhrzeigersinns.

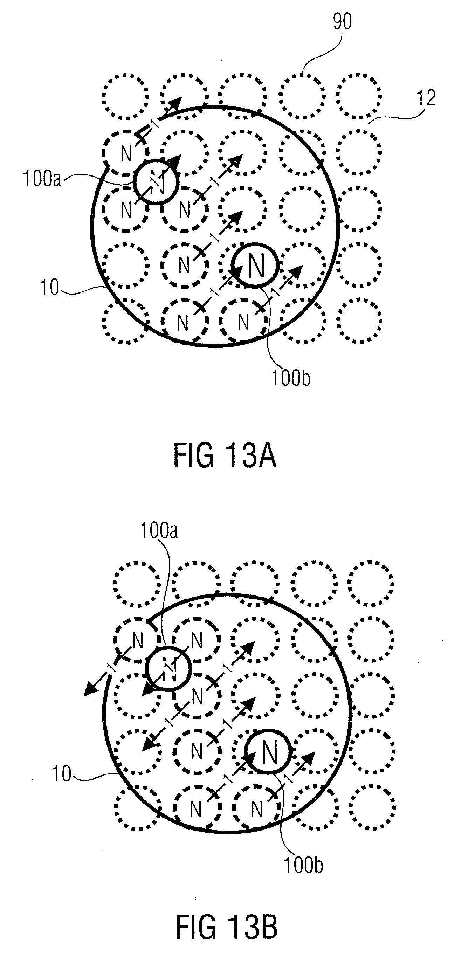

Fig. 13a und 13b greifen noch einmal den Fall auf, wie er in Fig. 10a angedeutet worden ist, nämlich die Bewegung eines Objekts durch Ausnutzung der magnetischen Abstoßung. In dem Fall von Fig. 13a und 13b weist das Objekt lediglich zwei Permanentmagneten 100a und 100b auf, so wie es auch in Fig. 11b der Fall war. Die magnetische Polung entspricht derjenigen aus Fig. 10a, d.h. erregte Magnetspulen 90 sind in entgegengesetzter Richtung zu den Permanentmagneten 100a und 100b gepolt. Wieder ist in Fig. 13a und 13b angedeutet, in welche Richtung der Ort der erregten Magnetspulen 90 wandert, um die Permanentmagneten 100a und 100b "vor sich herzuschieben".

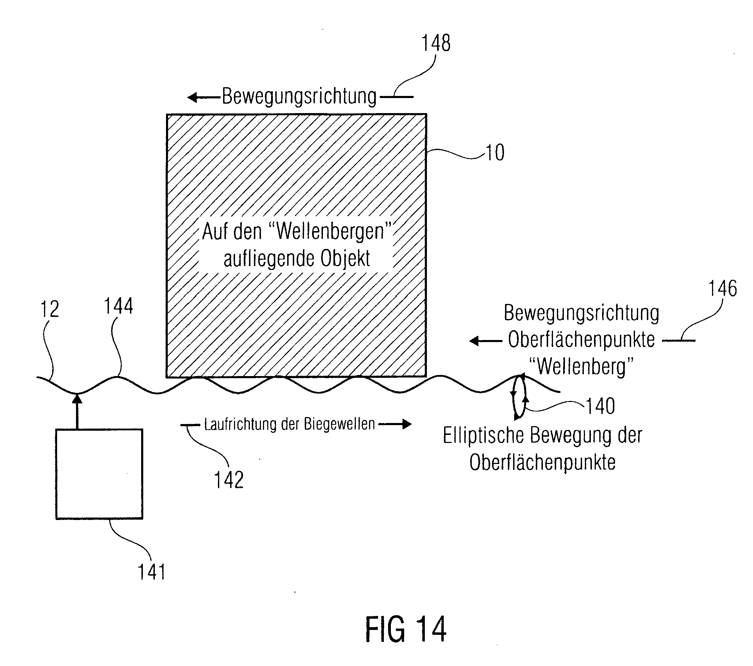

Bezug nehmend auf die Fig. 14 - 15b wird im Folgenden ein Ausführungsbeispiel für die Einrichtung 16 zum Bewegen des Objekts über die Oberfläche (Fig. 1) beschrieben, wonach die Einrichtung zur Bewegungserzeugung Biegewellen bzw. Oberflächenwellen in der Oberfläche 12 erzeugt. Die nachfolgenden Ausführungen stellen somit optional mit einer Maßnahme kombinierbar, wonach ein Luftkissen verwendet wird, um das Gewicht des Objekts zu reduzieren.

Das Prinzip, auf dem dieses Ausführungsbeispiel beruht, ist in Fig. 14 dargestellt. Eine sich entlang der Transportoberfläche 12 ausbreitende Oberflächen- bzw. Biegewelle, die durch eine Biegewellenerzeugungseinrichtung 141 erzeugt wird, bewirkt eine elliptische Bewegung 114 der Oberflächenpunkte der Oberfläche 12, wenn man deren Ort über die Zeit hinweg betrachtet. Es wird also noch mal darauf hingewiesen, dass in Fig. 14 der Zustand der Oberfläche 12 zu einem festen Zeitpunkt in seiner lateralen Ausdehnung gezeichnet ist, und für einen speziellen Oberflächenpunkt 140 dessen Positionsverlauf über die Zeit hinweg dargestellt ist, nämlich durch die Ellipse und die Pfeile bei 140. In dem Fall von Fig. 14 läuft die Laufrichtung der Biegewelle entlang des Pfeils 142. Wie es zu erkennen ist, bewegen sich die Oberflächenpunkte der Oberfläche 12 an den jeweiligen Wellenbergen 144, auf denen das Objekt 10 aufliegt, d.h. die Richtung der Linie 140 am obersten Punkt, in einer Richtung 146, die der Biegewellenausbreitungsrichtung 142 entgegengesetzt ist. Das Objekt 10, das ja auf den Wellenbergen 144 zumindest vornehmlich aufliegt, bewegt sich deshalb aufgrund der Biegewellen in der gleichen Richtung 148 wie die Oberflächenpunkte an den Wellenbergen, d.h. die Richtung 146.

Gemäß dem Ausführungsbeispiel von Fig. 14 umfasst deshalb die Einrichtung 16 zum Bewegen des Objekts über die Oberfläche (Fig. 1) eine Einrichtung zum Erzeugen von Biegewellen in der Oberfläche 12. Die Ansteuereinrichtung 18 erzeugt die Biegewellen so, dass, wie in Fig. 14 beschrieben, das Objekt 10 in die gewünschte Richtung bewegt wird. Die Ansteuereinrichtung 18 kann sich hierzu die bekannten Rechenmethoden aus der Wellenfeldsynthese zur Nutze machen, um die Biegewellenerzeugung entsprechend zu berechnen.

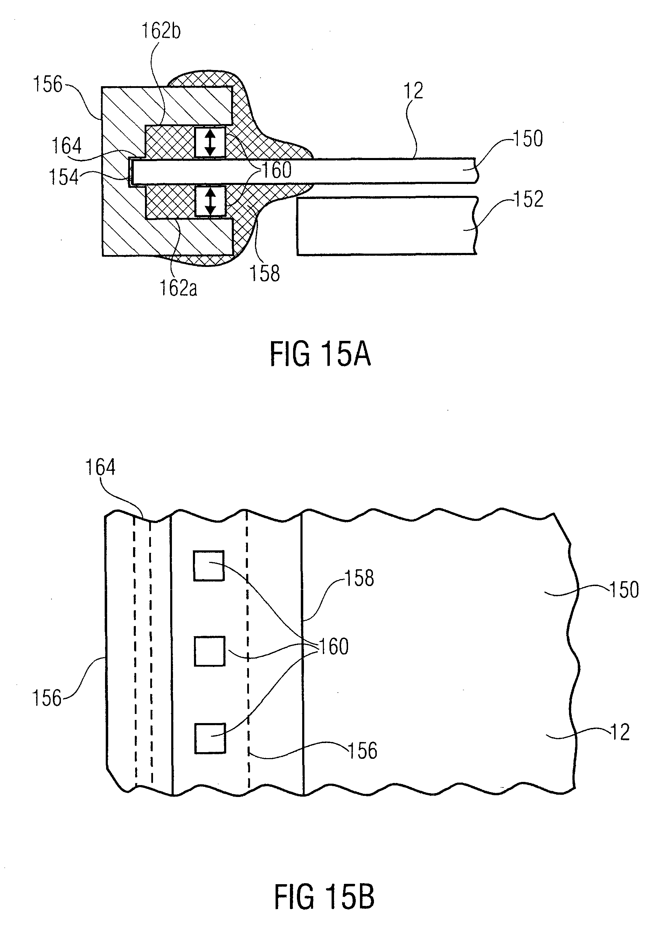

Fig. 15a und 15b stellen eine Möglichkeit dar, wie Biegewellen in der Transportoberfläche 12 erzeugt werden könnten. Die Transportoberfläche 12 wird durch eine Platte 150 gebildet, die beispielsweise steif ist und durchsichtig sein kann, was eine Kombination mit den nachfolgenden Ausführungsbeispielen für eine Lagebestimmungseinrichtung 14 ermöglicht, wonach zur Lagebestimmung ein Bildschirm 152 verwendet wird, der in Fig. 15a bereits angedeutet ist. Die Platte 12 wird entlang ihres Randes 154 von im Querschnitt u-förmigen Träger 156 gehalten, indem ein Material, das als Haftmittel und/oder als Mittel zur Dämpfung von Biegewellen in der Platte 150 dienen kann, 158 einen Zwischenraum zwischen dem als Halteklammer dienenden Träger 156 und der Platte 150 einnimmt und somit dieselben beispielsweise mechanisch miteinander verbindet und/oder akustisch koppelt bzw. entkoppelt. Piezoelemente 160 liegen an gegenüberliegenden Seiten der Platte 150 an und erstrecken sich zu gegenüberliegenden Innenseiten 162a und 162b des Trägers 156, um dort ebenfalls anzuliegen, so dass mechanische Schwingungen durch die Piezoelemente 160 in Flächennormalenrichtung zur Platte 150, wie es durch Doppelpfeile in Fig. 15a angedeutet ist, möglichst ungedämpft auf die Platte 150 übertragen werden. Die Piezoelemente 160 sind beispielsweise entlang des Rands 154 der Platte 150 in einem geeigneten exemplarisch äquidistanten Abstand zueinander angeordnet.

In dem Träger 156 kann, wie es in Fig. 15a und 15b zu sehen ist, eine Nut 164 entlang der Erstreckungsrichtung des Platterandes vorgesehen sein, in die die über das dämpfende Material 158 gehaltene Platte 150 hineinragt, so dass bei Ausüben von zu großen Kräften auf die Platte 150 in Richtung der Flächennormalen die Piezoelemente 160 bzw. das dämpfende Material 158 nicht beschädigt wird. In anderen Worten ausgedrückt schränkt die Nut 164 translatorische Bewegungen der Platte 150 in Flächennormalenrichtung um eine durch das dämpfende Material 158 definierte Ruhelage so ein, dass die Piezoelemente 160 nicht beschädigt werden können.

Natürlich kann die Nut 164, die ja relativ zu den Piezoelementen 160 weiter außen angeordnet ist, so ausgebildet sein, dass sie zwischen Platte 150 und ihrer Innenseite kein Spiel lässt, so dass die Nut 164 die Platte 150 festhält. Je nach den Gegebenheiten, wie z.B. der Steifigkeit und der Dicke der Platte, kann letztere Lösung die Biegewellenerzeugung mit geeigneter Frequenz und Amplitude erleichtern.

Es wird allerdings sogleich darauf hingewiesen, dass zu der in Fig. 15a und 15b dargestellten Lösung eine Vielzahl von Alternativen existieren, die sowohl die Art der Anregung betreffen, d.h. andere Antriebsmechanismen als Piezo-Antriebe, wie z.B. durch elektromotorische Antriebe, als auch die Fixierung oder Nicht-Fixierung am Rand, die Biegewellendämpfung am Rand durch beispielsweise dämpfendes Material oder geeignete Ausformung des Querschnittes des Randes, die Halterung der Platte, wie z.B. durch eine Sicke anstatt durch Nut und/oder Schaumstoffmaterial, und die Anordnung der Erregungseinrichtungen 160.

Obwohl in Fig. 15a angedeutet ist, dass die Piezoelemente 160 beiderseits der Platte 150 angeordnet sind, ist es ferner möglich, dass die Piezoelemente 160 nur auf einer Seite angeordnet sind, wie z.B. auf der Seite, die die Transportoberfläche 12 bildet.

Durch geeignete Vorkehrungen können Reflexionen von Biegewellen in der Platte 150 an dem Rand 154 vermieden werden. Dazu ist die Platte 150 entlang ihres Randes 154 beispielsweise beschichtet oder das dämpfende Material 158 ist geeignet ausgewählt oder die Form der Platte 150 weist an ihrem Rand einen sich verjüngenden Querschnitt auf oder dergleichen, um auf ein oder ein Kombination dieser Weisen einen Anti-Reflexionsrandabschluss zu liefern.

Obwohl es in Fig. 15a und 15b nicht gezeigt ist, kann die Platte 150 beispielsweise eine rechteckige oder quadratische Form aufweisen. Andere Formen sind aber ebenfalls möglich, wie z.B. eine runde oder dergleichen.

Schließlich wird darauf hingewiesen, dass die Biegewellen nicht notwendigerweise in einer Platte gebildet werden müssen. Gegebenenfalls können Oberflächenwellen auch in einem voluminösen Körper erzeugt werden, dessen eine Seite als die Transportebene dient.

Nachdem nun Ausführungsbeispiele der vorliegenden Erfindung für die Einrichtung 16 zum Bewegen des Objekts über die Oberfläche (Fig. 1) beschrieben worden sind, wird im Folgenden zunächst anhand der Fig. 16 - 25 eine Mehrzahl von Ausführungsbeispielen für die Lagebestimmungseinrichtung 14 (Fig. 1) beschrieben, wonach die Lagebestimmungseinrichtung 14 eine Anzeige sowie einen optischen Sensor in dem Objekt aufweist.

Fig. 16 zeigt eine Vorrichtung zur Bestimmung einer Position bzw. Lage eines Objekts 601 auf einer Anzeige 602. Die Vorrichtung umfasst eine Ansteuereinrichtung 603a zum Ansteuern der Anzeige 602 derart, dass dieselbe an einer Vorderseite 602a eine lateral variierende Information anzeigt, sowie einen optischen Sensor 603b zur Unterbringung in oder an dem Objekt 601 und zum optischen Abtasten einer Auflagefläche 602a' der Vorderseite 602a, auf der das Objekt 601 aufliegt oder steht, um ein Abtastergebnis bezüglich der lateral variierenden Information zu erhalten. Darüber hinaus umfasst die Vorrichtung eine Bestimmungseinrichtung 604, 604' zum Bestimmen der Position des Objekts 601 auf der Anzeige 602 abhängig von dem Abtastergebnis, die, wie es in Fig. 16 durch gestrichelte Linien angedeutet ist, in bzw. an dem Objekt und/oder außerhalb des- und getrennt zu demselben angeordnet sein kann.

Wie es in den nachfolgenden Ausführungsbeispielen noch näher erläutert werden wird, bestehen verschiedene Möglichkeiten für die lateral variierende Information, die die Anzeige 602 auf Ansteuerung durch die Ansteuereinrichtung 603a hin anzeigt. Beispielsweise könnte die Anzeigeeinrichtung 603a die Anzeige 602 ansteuern, um sequentiell potentielle Standorte bzw. Positionen des Objektes 601 auf der Anzeige 602 sequentiell abzufragen, indem sie die Anzeige 602 derart ansteuert, dass dieselbe eine optische, von einem augenblicklichen Bildschirmhintergrund der Anzeige 602 unterscheidbare, räumlich begrenzte Charakteristik, wie zum Beispiel ein voll ausgeleuchtetes Pixel, ein ausgeschaltetes Pixel oder ein flackerndes Pixel, als die lateral variierende Information sequentiell an den verschiedenen Positionen auf der Vorderseite 602a anzeigt. Dazu scannt die Charakteristik beispielsweise den ganzen Bildschirm 602 in einem Zick-Zack-Pfad, wie z.B. zeilenweise, ab. Auf Basis einer Synchronisation zwischen der sequentiellen Anzeige der Charakteristik an den potentiellen Orten einerseits und der Bestimmungseinrichtung 604 bzw. 604' andererseits kann dann die Bestimmungseinrichtung 604 bzw. 604' aus einem Zeitverhältnis zwischen der sequentiellen Anzeige der Charakteristik auf der Anzeige 602 einerseits und dem Zeitpunkt, da der optische Sensor 603b die Charakteristik erfasst, nämlich zu dem Zeitpunkt, da sich die Charakteristik innerhalb der Auflagefläche 602a' befindet, auf die Position des Objektes 601 auf der Anzeige 602 schließen. Ist die Bestimmungseinrichtung 604 bzw. 604' extern zu dem Objekt 601 angeordnet, wie es bei 604' gezeigt ist, so kann die gemeinsame Zeitbasis bzw. die Synchronisation zwischen Bestimmungseinrichtung 604' und Ansteuereinrichtung 603a auf einfache Weise, beispielsweise durch eine gemeinsame Taktung, erfolgen. Dieser Fall wird im Folgenden noch näher, Bezug nehmend auf die nachfolgenden Figuren, erläutert werden. Es wäre aber natürlich auch möglich, dass die Bestimmungseinrichtung in dem Objekt 601 von der Ansteuereinrichtung 603a lediglich über den Beginn der sequentiellen Anzeige der Charakteristik informiert wird, die daraufhin in einer vorbestimmten Geschwindigkeit, beispielsweise zyklisch, die möglichen Standorte bzw. Positionen durchläuft. Zur Beibehaltung der Synchronisation kann ein weiterer Abgleich vorgesehen sein. Ferner ist es möglich, dass die Bestimmungseinrichtung 604 bzw. 604' und die Ansteuereinrichtung 603a so zusammenarbeiten, dass der durch den optischen Sensor 603b erfasste Helligkeitswert nach jeder Verschiebung der Charakteristik an den nächsten potentiellen Ort aktiv abgefragt wird, woraufhin erst die Charakteristik wiederum weiter verschoben und der nächste Helligkeitswert abgefragt wird usw.

Neben der vorerwähnten Möglichkeit, die möglichen Standorte des Objektes 601 durch sequentielles Durchlaufen dieser Standorte und sequentielles Anzeigen einer Charakteristik an diesen Standorten sequentiell oder sogar zyklisch abzufragen, besteht eine weitere Möglichkeit zur Bestimmung des Ortes darin, dass die Anzeigeeinrichtung 603a die Anzeige 602 derart ansteuert, dass dieselbe eine sich schrittweise verfeinernde binäre Unterteilung anzeigt, die es ermöglicht, das Objekt 601 in n Schritten mit einer Genauigkeit zu lokalisieren, die einem 2⁻ⁿ-tel der Ausdehnung der Anzeige 602 entspricht. Beispielsweise halbiert die Anzeigeeinrichtung 603a die Ausdehnung der Anzeige 602 zunächst in zwei Hälften, indem sie in der einen Hälfte etwas anderes anzeigt als in der anderen bzw. in der einen Hälfte den Bildschirmhintergrund mit etwas anderem überlagert als in der anderen. Basierend auf dem Abtastergebnis durch den optischen Sensor 603b kann dann die Bestimmungseinrichtung 604 bestimmen, in welcher der Hälften sich das Objekt 601 befindet, woraufhin sie diese Hälfte in den nächsten Schritt auf entsprechende Weise erneut halbiert und basierend auf dem erneuten Abtastergebnis ermittelt, in welchem Bildschirmviertel der Anzeige 602 sich das Objekt 601 befindet usw. In dem Fall mehrerer Objekte auf der Anzeige 602 ist es auch möglich, dass die Ansteuereinrichtung 603a alle aktuellen Bereiche erneut halbiert, in denen sich ein Objekt in einem bestimmten Schritt befindet, weshalb durch die soeben beschriebene schrittweise verfeinernde binäre Unterteilung der Anzeige 602 eine Lokalisation mehrerer Objekte in gleicher Auflösung gleichzeitig möglich ist. Auch diese Art der Lokalisation wird in den nachfolgenden Ausführungsbeispielen noch näher erläutert. Eine gemeinsame Zeitbasis zwischen der Bestimmungseinrichtung 604 bzw. 604' und der Ansteuereinrichtung 603a, damit die Bestimmungseinrichtung das Abtastergebnis des optischen Sensors 603b dem richtigen Schritt bei der schrittweisen verfeinernden binären Unterteilung zuordnen kann, kann wie bei dem vorhergehenden scannenden Abfragen des Anzeigebildschirms ausgeführt werden, wie z.B. durch Abfrage des bzw. der Helligkeitswerte pro Schritt.

Schließlich wäre es möglich, dass die Ansteuereinrichtung 603a die Anzeige 602 derart ansteuert, dass dieselbe eine sich lateral variierende Information anzeigt, die lateral derart variiert, dass anhand eines Ausschnitts dieser Information mit einer Ausdehnung, die derjenigen, die durch den optischen Sensor 603b abgetastet wird, entspricht, eindeutig auf den Ort innerhalb der Anzeige 602 rückgeschlossen werden kann. Ein Beispiel hierfür wäre ein kariertes Muster auf der Anzeige 602, dessen Intervallbreite sich von einer Ecke bis zu einer gegenüberliegenden Ecke der Anzeige 602 streng monoton ändert. In diesem Fall bedürfte es keiner Synchronisation bzw. keiner gemeinsamen Zeitbasis zwischen der Bestimmungseinrichtung 604 und der Ansteuereinrichtung 603a.

Ein Vorteil der Unterbringung der Bestimmungseinrichtung 604' außerhalb des Objektes 601 besteht darin, dass die Anforderungen an die pro zu lokalisierendem Objekt 601 bereitzustellende Leistungsfähigkeit geringer ist. In dem Fall einer drahtlosen Übertragung von dem optischen Sensor 603b zu der Bestimmungseinrichtung 604' kann es beispielsweise sein, dass unmittelbar die von dem optischen Sensor 603b erfassten Helligkeitsinformationen an die Bestimmungseinrichtung 604' übertragen werden, die dieselben daraufhin auf die lateral variierende Information hin untersucht, die auf der Anzeige 602 angezeigt worden ist. Es ist aber ferner möglich, dass ein in dem Objekt 601 befindlicher Teil 604 der Bestimmungseinrichtung bereits eine Vorverarbeitung der reinen Helligkeitsinformationen des optischen Sensors 603b vornimmt, um an den anderen Teil 604' aus den Helligkeitsinformationen extrahierte Informationen zu übertragen, wie zum Beispiel einen Zeitpunkt des Auftretens, der die Anzeige 602 sequentiell durchlaufenden Charakteristik in dem Bereich der Auflagefläche 602a'. Verschiedene weitere Möglichkeiten werden im Folgenden noch erörtert.

Nachdem nun im Vorhergehenden eine Vorrichtung zur Bestimmung eines Objektes auf einer Anzeige grob erläutert worden ist, wird im Folgenden Bezug nehmend auf die Fig. 17 bis 20 eine Spielvorrichtung beschrieben, wie z. B. für Schach oder dergleichen, bei der eine Spielfigur oder mehrere Spielfiguren auf einer Anzeige der Spielvorrichtung lokalisiert werden, so dass die nachfolgenden Ausführungen quasi auch eine mögliche Anwendung für die in Fig. 16 beschriebene Vorrichtung darstellen.

Obwohl im Folgenden eine solche Spielvorrichtung beschrieben wird, ist jedoch die Positionsbestimmung, wie sie dort für die Spielfigur verwendet wird, auch bei anderen Anwendungen für entsprechende Objekte anwendbar, wie es im Anschluss an die Figurenbeschreibung der Fig. 16 - 20 noch erörtert werden wird.

Die Spielvorrichtung von Fig. 17, die allgemein mit 605 angezeigt ist, umfasst eine Anzeige 610, einen Computer 612, einen Empfänger 614 sowie eine Spielfigur 616. Der Computer 612 ist mit der Anzeige 610 verbunden und umfasst eine Ansteuereinrichtung 618 zur Ansteuerung der Anzeige 610, wie z. B. eine Graphikkarte des Computers 612, sowie eine Verarbeitungseinrichtung 620, wie z. B. eine CPU des Computers 612 in Verbindung mit einem auf derselben ablaufenden Programm, die für die Spielfunktionalitäten der Spielvorrichtung 605 verantwortlich ist, wie es im Folgenden noch näher erörtert werden wird. Der Computer 612 bzw. die Verarbeitungseinrichtung 620 ist ferner mit dem Empfänger 614 verbunden.

Die Spielfigur 616 weist eine Stellfläche 622 auf, die dazu vorgesehen ist, während des Spiels auf der Anzeige 610 aufzuliegen und damit einen Teil des Bildschirminhalts der Anzeige 610 abzudecken, d.h. die Auflagefläche.

Im Innern der Spielfigur 616 befindet sich eine Sendeeinrichtung 624, die mit dem Empfänger 614 kommuniziert und zudem in der Lage ist, zu einem Zeitpunkt, da die Spielfigur 616 auf der Anzeige 610 platziert ist, einen Teil des Bildschirminhalts zu erfassen, der sich unterhalb der Stellfläche 622 befindet.

Die Spielvorrichtung verfügt auch über die Fähigkeit, die Spielfigur ohne Benutzerinteraktion zu bewegen, wozu der Computer 612 bzw. die Verarbeitungseinrichtung 620 beispielsweise auch die Funktion der Ansteuerung 18 übernimmt, und besitzt eine Bewegungseinrichtung 16, die über die Ansteuerung 18 und mit der Lagebestimmungseinrichtung gekoppelt ist, welche letztere durch die Anzeige 610, die Verarbeitungseinrichtung 620, die Ansteuereinrichtung 618 und den optischen Sensor in dem Objekt 616 gebildet wird.

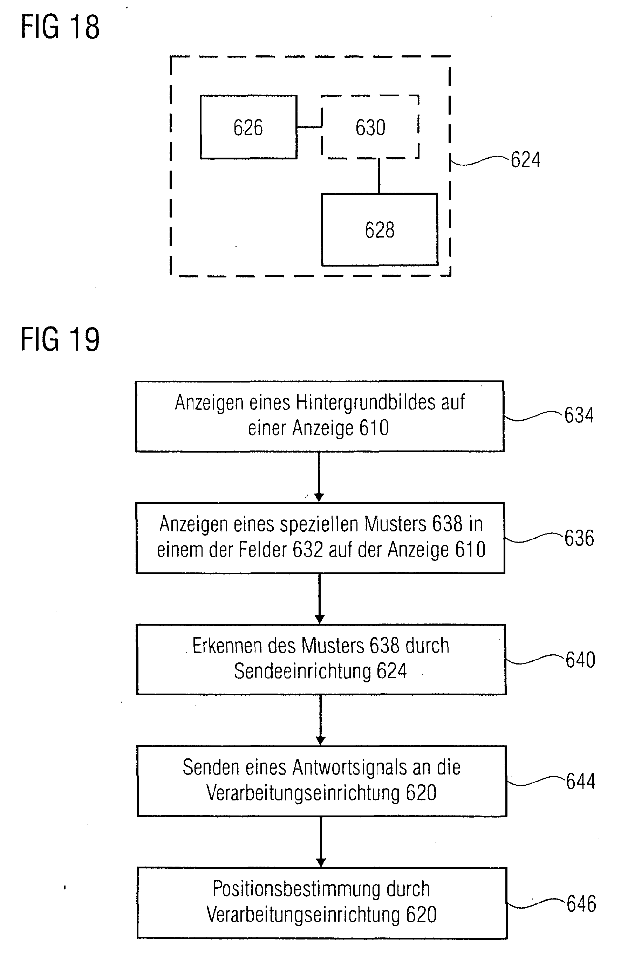

Wie es in Fig. 18 gezeigt ist, umfasst die Sendeeinrichtung 624 insbesondere einen Sender 626, der in der Lage ist, ein Antwortsignal an den Empfänger 614 zu senden, worauf im Folgenden noch näher eingegangen werden wird, und einen optischen Sensor 628, wie z. B. eine Fotozelle oder ein Fotoarray, die bzw. der so ausgerichtet ist, dass er auf die Stellfläche 622 einfallende Strahlung bzw. Licht erfasst. Daneben kann die Sendeeinrichtung 624 noch eine Verarbeitungseinrichtung 630 aufweisen, über die der Sender 626 mit dem optischen Sensor 628 gekoppelt ist, wobei jedoch alternativ auch eine direkte Kopplung zwischen Sender 626 und optischem Sensor 628 möglich wäre.

Nachdem nun im Vorhergehenden die einzelnen Komponenten der Spielvorrichtung 605 beschrieben worden sind, wird nachfolgend bezugnehmend auf Fig. 19 die Funktionsweise der Spielvorrichtung während eines Spiels beschrieben. Bei dem Spiel kann es sich beispielsweise um Schach oder dergleichen handeln, wobei sich jedoch die nachfolgende Erörterung bezugnehmend auf Fig. 19 darauf beschränkt, die Funktionalität der Verarbeitungseinrichtung 620 in dem Zusammenhang mit der Bestimmung der Position der Spielfigur 616 auf der Anzeige 610 zu beschreiben, die die Verarbeitungseinrichtung 620 dann beispielsweise dazu verwendet, Spielzüge aufzuzeichnen, Spielzüge eines Computer-Gegners zu bestimmen oder dergleichen.

Im Grundzustand, d. h. in einem Ausgangszustand des Verfahrens nach Fig. 19, veranlasst die Verarbeitungseinrichtung 620 die Ansteuereinrichtung 618 die Anzeige 610 so anzusteuern, dass die Anzeige 610 ein Spielfeld anzeigt. Die Verarbeitungseinrichtung 620 hat also Kenntnis über das auf der Anzeige 610 dargestellte Spielfeld. In Fig. 17 ist exemplarisch ein Spielfeld dargestellt, das drei Spielfelder 632 aufweist, auf die die Spielfigur 616 gemäß Spielregeln gestellt werden darf. Das Anzeigen des Hintergrundbildes wird in Schritt 634 durchgeführt. Daraufhin steuert die Ansteuereinrichtung 618 die Anzeige 610 so an, dass das Hintergrundbild beziehungsweise das Spielbrett an den möglichen Spielfeldern 632 von einem speziellen Muster überlagert wird, dass sich von dem Hintergrundbild erkennbar abhebt. Insbesondere steuert die Ansteuereinrichtung 618 die Anzeige 610 in dem Schritt 636 derart an, dass die Spielfelder 632 nacheinander und beispielsweise zyklisch durchlaufen werden, um jeweils sequentiell hintereinander das spezielle Muster anzuzeigen. Die Anzeige des Musters in den jeweiligen Spielfeldern 632 kann sich beispielsweise auf einen Teilbereich 638 im Innern der Spielfelder 632 beschränken, wie z.B. auf ein Pixel der Anzeige 610. Das spezielle Muster kann sich von dem sonstigen das Spielbrett darstellenden Hintergrund durch eine spezielle Farbe oder eine zeitliche Variation in Helligkeit oder Farbe unterscheiden, wobei im Folgenden dazu noch verschiedene Ausführungsbeispiele geliefert werden.

Während des Schrittes 636 tastet der optische Sensor 628 der Sendeeinrichtung 624 ständig denjenigen Teil des Bildschirminhalts der Anzeige 610 ab, der sich unterhalb der Stellfläche 622 der Spielfigur 616 befindet. Sobald in dem Schritt 636 das spezielle Muster in demjenigen Spielfeld 632 angezeigt wird, auf dem die Spielfigur 616 steht, ist dann an dem Ausgangssignal des optischen Sensors 628 dieses spezielle Muster für die Verarbeitungseinrichtung 630 erkennbar. Nach dem Erkennen des optischen Musters durch die Verarbeitungsrichtung 630 in Schritt 640 veranlasst die Verarbeitungseinrichtung 630 den Sender 626 über die kontaktlose Schnittstelle 642 ein Antwortsignal an den Empfänger 614 auszusenden (Schritt 644). Der Empfänger 614 leitet das Antwortsignal an die Verarbeitungseinrichtung 620 weiter. Zum Zeitpunkt des Empfangs des Antwortsignals ist die Verarbeitungseinrichtung 620 zudem in Kenntnis über dasjenige Spielfeld 632, in dem in Schritt 636 das spezielle Muster angezeigt wird. Unter Berücksichtigung eines eventuellen zeitlichen Versatzes zwischen der Anzeige des speziellen Musters in dem jeweiligen Spielfeld 632 und dem Erhalt der Kenntnis des Aussenden des Antwortsignals von dem Sender 626 bestimmt dann die Verarbeitungseinrichtung 620 in dem Schritt 646 die Position der Spielfigur 616 auf der Anzeige 610.

Das Senden des Antwortsignals über die kontaktlose Schnittstelle 642 ist beispielsweise mittels der Verwendung der RFID-Technologie (RFID = radio frequency identification) möglich. Es ist aber auch ein (in Fig. 17 nicht eingezeichnetes) kabelgebundenes Senden der Sendeeinrichtung 624 an die Verarbeitungseinrichtung 618 möglich.

Ist das im Schritt 644 von dem Sender 626 gesendete Signal derart gestaltet, dass es eine eindeutige Identifikationsnummer enthält, so kann im Schritt 646 neben der Positionsbestimmung einer Figur auch noch eine eindeutige Identifizierung der Figur unter einer Mehrzahl von Spielfiguren vorgenommen werden. Dies erlaubt Spiele, wie z. B. Schach, bei denen Spielfiguren verschiedene Bedeutungen haben und deshalb die Verarbeitungseinrichtung 620 in der Lage sein sollte diese zu unterscheiden.

Im Falle eines Schachspiels könnte die eindeutige Identifikationsnummer beispielsweise eine Identifikationsnummer zwischen 1 und 32 sein, um die 32 Schachfiguren zu unterscheiden.

Da zu jedem Zeitpunkt des Spiels der Verarbeitungseinrichtung 618 die Position und Art der sich auf der Anzeige 610 befindlichen Spielfiguren 616 bekannt ist, ist ein schnelles "Nachbauen" einer speziellen Spielsituation möglich, ohne dass man erst von der Schachgrundstellung bis zu dieser Situation "hinspielen" müsste.

Ist der Computer 612 beziehungsweise die Verarbeitungseinrichtung 620 noch mit einer Datenschnittstelle 648 (wie z.B. ein Modem oder eine Netzwerkverbindung) verbunden, so kann die Verarbeitungseinrichtung 620 die Position und die Identität aller Spielfiguren sowie eventuell den auf der Anzeige 610 dargestellten Hintergrund an eine externe Vorrichtung senden. Ist des Weiteren die Verarbeitungseinrichtung 620 derart ausgelegt, dass sie auch Daten von der Datenschnittstelle 648 empfangen kann, so lässt sich damit ein Teamspielermodus erreichen. Beispielsweise könnten beim Schachspiel zwei Spieler gegeneinander spielen, deren Verarbeitungseinrichtungen 620 mittels der Datenschnittstelle 648 über das Internet vernetzt wären. Jeder Spieler würde nur seine Figuren bewegen. Die Figuren des über das Netzwerk verbundenen Spielers würden von dem lokalen Computer vermittels der Einrichtungen 14, 16 und 18 gezogen werden. Beispielsweise würde beim Spielzug eines ersten Spielers lokal die neue Position, einer soeben bewegten Spielfigur 616, auf dem durch die Anzeige 610 dargestellten Spielbrett wie in Fig. 19 beschrieben detektiert werden. Die Verarbeitungseinrichtung 620 würde dann mittels der Datenschnittstelle 648 über das Internet die neue Position dieser Figur an die entsprechende Verarbeitungseinrichtung 620 des zweiten Spielers melden, welche wiederum die Steuereinrichtung 618 veranlassen würde, die Bewegungseinrichtung so anzusteuern, dass auf der Anzeige 610 des zweiten Spielers die gezogene Spielfigur 616 (zum Beispiel Läufer, Bauer, etc.) die neue Position einnimmt. Daraufhin kann der zweite Spieler die neue Spielsituation erfassen und seinen nächsten Zug planen, welcher nach Ausführung gemäß obigem Verfahren wiederum an den ersten Spieler gemeldet würde. Das Spiel 605 kann also als Schachspiel verwendet werden, bei dem man gegen den Computer, aber auch gegen einen anderen räumlich getrennten Spieler spielt und wobei sich die gegnerischen Figuren automatisch bewegen. Die Verarbeitungseinrichtung 620 kann hierbei auch die Einhaltung von Spielregeln überprüfen, und den Spieler (im Falle eines Spiels gegen einen Computergegner) bzw. die Spieler (im Falle eines Spiels im Teamspielermodus) auf die Ausführung einer nach Spielregeln unzulässigen Aktion aufmerksam machen.

Obwohl im obigen Beispiel des Schachspiels der Teamspielermodus naturgemäß nur zwei Spieler umfasst, ist es mit der Spielvorrichtung 605 auch möglich Spiele zu spielen bei, denen mehrere Spieler gegeneinander antreten können, wie z.B. im Falle des Spiels "Mensch-Ärger-Dich-Nicht".

Ein weiteres Ausführungsbeispiel soll die Umsetzung von Spielen, wie etwa Strategiespielen, verdeutlichen, bei welchen nicht nur die Bestimmung der Position und die Identifizierung der einzelnen Spielfiguren von entscheidender Bedeutung ist, sondern auch die Orientierung der Figuren auf dem Spielbrett. Die für manche Spiele strategisch wichtige Information der Orientierung der Figuren, wie beispielsweise der Vormarsch, Rückzug oder Zangenbewegung militärischer Truppen, könnte mit der Vorrichtung und dem Verfahren, wie z. B. in Fig. 5 beschrieben, erfasst werden. Das sequentiell in jedem Feld der Anzeige 10 dargestellte Muster 38 würde beispielsweise 3 x 3 Pixel umfassen. Die Bestimmung der Position einer Spielfigur 16 und der Identifikation dieser Spielfigur 16 könnte, wie obigen Ausführungsbeispiel des Schachspiels, vorgenommen werden. Die Orientierungsbestimmung der Spielfigur 16 könnte nun beispielsweise so erfolgen, dass in vier zeitlichen Schritten jeweils ein Eckpixel des Musters 38 ausgeschaltet wäre (das Eckpixel also nicht leuchten würde) und somit vom optischen Sensor 28 der Sendeeinrichtung 24 nicht erkennbar wäre.

Der entsprechende optische Sensor 628 an der Sendeeinrichtung 624 wäre dann derart aufgebaut, dass ein Eckpixel des ebenfalls 3 x 3 Pixel großen Feldes blind geschaltet wäre (also nicht abtastfähig). In jedem der vier zeitlichen Schritte überprüft die in der Sendeeinrichtung 624 untergebrachte Verarbeitungseinrichtung 630 die vom optischen Sensor 628 erfasste Anzahl der dunklen (also nicht leuchtenden) Eckpixel. In einem der vier zeitlichen Schritte koinzidieren das ausgeschaltete Eckpixel des Musters 628 mit dem "blinden" Eckpixel des optischen Sensors 628, d.h. es wird nur ein Eckpixel als dunkel detektiert. Am Ende der vier zeitlichen Schritte veranlasst die Verarbeitungseinrichtung 630 den Sender 626 ein Antwortsignal an die Verarbeitungseinrichtung 620 zu senden, das als Information enthält in welchem der vier zeitlichen Schritte nur ein dunkles Eckpixel registriert wurde. Ist der Verarbeitungseinrichtung 620 die Lage des Blindpixels am optischen Sensor 626 bezüglich der Figur (z. B. "hinten links") bekannt, so wäre aus diesem Antwortsignal eine Orientierungsbestimmung der Spielfigur 616 möglich, da die Verarbeitungseinrichtung 620 aus der Kenntnis der vier zeitlichen Schritte beim Anzeigen des Musters 628, und der Information in welchem der vier zeitlichen Schritte nur ein dunkles Eckpixel registriert wurde, eine eindeutige Orientierungsinformation der Spielfigur 616 erhält. Diese Art der Detektion würde vier Orientierungsrichtungen der Spielfigur 616, nämlich "vorwärts gerichtet", "nach rechts gedreht", "nach links gedreht" und "rückwärts gerichtet", ermöglichen. Eine mögliche feinere Pixelierung des Musters 638 und des optischen Sensors 628 würde beispielsweise eine noch genauere Bestimmung der Orientierung der Spielfigur 616 ermöglichen.

Alternativ wäre es auch möglich, die Orientierung der Spielfigur 616 darüber zu bestimmen, dass die Sendeeinrichtung 624 das vom optischen Sensor 628 detektierte Muster 638 an die Verarbeitungseinrichtung 620 als Antwortsignal meldet. Die Verarbeitungseinrichtung 620 könnte dann aus diesem Antwortsignal und unter Verwendung ihrer Kenntnis über die Orientierung des Musters 638 auf der Anzeige 610, indem sie z. B. erkennt, dass das im Antwortsignal enthaltene Bild des Musters 638 "auf dem Kopf steht", die Orientierung der Spielfigur 616 bestimmen.

Obwohl im Vorhergehenden das Senden des Antwortsignals im Schritt 644 immer durch das Erkennen des Musters 628 durch den optischen Sensor 628 ausgelöst wurde, ist es auch möglich, dass die Sendeeinrichtung 624 permanent das vom optischen Sensor 628 erfasste Bild und eine eindeutige Identifikationsnummer an die Verarbeitungseinrichtung 620 sendet. Die Verarbeitungseinrichtung 620 veranlasst dann beispielsweise die Ansteuereinrichtung 618 zyklisch in jeweils einem der Felder 632 das Muster 626 darzustellen. In diesem Fall erfolgt die Positionsbestimmung des Objektes 616 dadurch, dass die Verarbeitungseinrichtung 620 registriert, wenn das von der Sendeeinrichtung 624 übermittelte Bild das Muster 626 enthält, und somit eine eindeutige Positionsbestimmung des Objektes 626 in dem Feld 632 möglich ist, in welchem das Muster 626 erzeugt wird.

Wie bereits erwähnt kann die Verarbeitungseinrichtung 630 fehlen, in dem Fall dass der Messwert des Sensors 628 ausgesendet wird, wobei der Messwert eine Zahl sein kann, die vom Lichteinfall auf den Sensor 628 abhängt. Natürlich kann die Verabreitungseinrichtung 628 aus dieser Zahl vor Aussendung durch Quantisierung oder Schwellwertvergleich einen anderen Wert ermitteln, der dann an die Bestimmungseinrichtung ausgesendet wird. In dem Fall eines Sensors mit mehreren Pixeln, werden beispielsweise die Messwerte aller Pixel zu einem Zeitpunkt an die Bestimmungseinrichtung übertragen. Die Verarbeitungseinrichtung 630 könnte allerdings aus den mehreren Messwerten der Pixel durch Vorverarbeitung auch einen beispielsweise skalaren Wert bestimmen, der dann als Antwortsignal an die Bestimmungseinrichtung übertragen wird.

Obwohl im Vorhergehenden nur Vorrichtungen und Verfahren beschrieben wurden in denen die Verarbeitungseinrichtung 620 die Ansteuereinrichtung 618 veranlasst sequentiell ein Muster 638 in jeweils einem der Felder 632 anzuzeigen, ist es auch möglich, dass simultan in jedem der Felder 632 auf der Anzeige 610 verschiedene, eindeutig unterscheidbare, Muster 638 angezeigt werden. Eine Positionsbestimmung des Objektes 616 ist dann dadurch möglich, dass der Sender 626 ständig das vom optischen Sensor 628 erfasste Bild an die Verarbeitungseinrichtung 620 sendet, welche dann aus einem Vergleich des empfangenen Bildes und aller in den Feldern 632 dargestellten Mustern die Position des Objektes 616 in dem Feld 632 bestimmt, in welchem das angezeigte Muster 638 mit dem im Antwortsignal enthaltenen Bild übereinstimmt. Hierbei können alternativ von der Verarbeitungseinrichtung 620 auch Rotationen des übertragenen Bildes berücksichtigt werden, um eine Übereinstimmung des Bildes mit einem auf der Anzeige 610 dargestellten Muster zu erhalten.

Bei der vorhergehenden Erörterung der Fig. 16 bis 20 diente die Verarbeitungseinrichtung 620 als die Bestimmungseinrichtung 604' von Fig. 16 und die Verarbeitungseinrichtung 630 übernahm Aufgaben der Bestimmungseinrichtung 604 aus Fig. 16.

Explizit sei noch einmal darauf hingewiesen, dass es nicht notwendig ist, dass der optische Sensor 603b bzw. 628 eine laterale Auflösung aufweist. Der optische Sensor kann vielmehr lediglich ein Pixel aufweisen und somit pro Zeitpunkt lediglich einen Helligkeitswert inklusive und exklusive Farbinformation bestimmen. Insbesondere kann somit der optische Sensor als eine einzelne Fotodiode ausgebildet sein. Ein Array von Fotodioden ist nicht erforderlich. Dies wird auch noch einmal aus folgendem Ausführungsbeispiel deutlich, das sich auf ein Spiel mit mehreren Spielfiguren bezieht und anhand von Fig. 17 erläutert wird. Beispielsweise weisen bei diesem Ausführungsbeispiel alle Spielfiguren 616 einen passiven oder einen semi-passiven RFID-Sensor auf, der die Einrichtung 626 und ggf. 630 umfasst, und an den ein einzelner Fotosensor, wie z.B. eine Fotodiode, 628 angeschlossen ist, die beispielsweise eine lichtempfindliche Fläche aufweist, die in der Ausdehnung größer als ein Pixel der Anzeige 610 ist. Da die Spielfiguren in diesem exemplarischen Fall lediglich mit Fotodioden ausgestattet sind, die zudem relativ großflächig ausfallen können, fallen die Kosten für das Spiel geringer aus als in dem Fall eines Arrays von Fotodioden in den jeweiligen Spielfiguren 616.

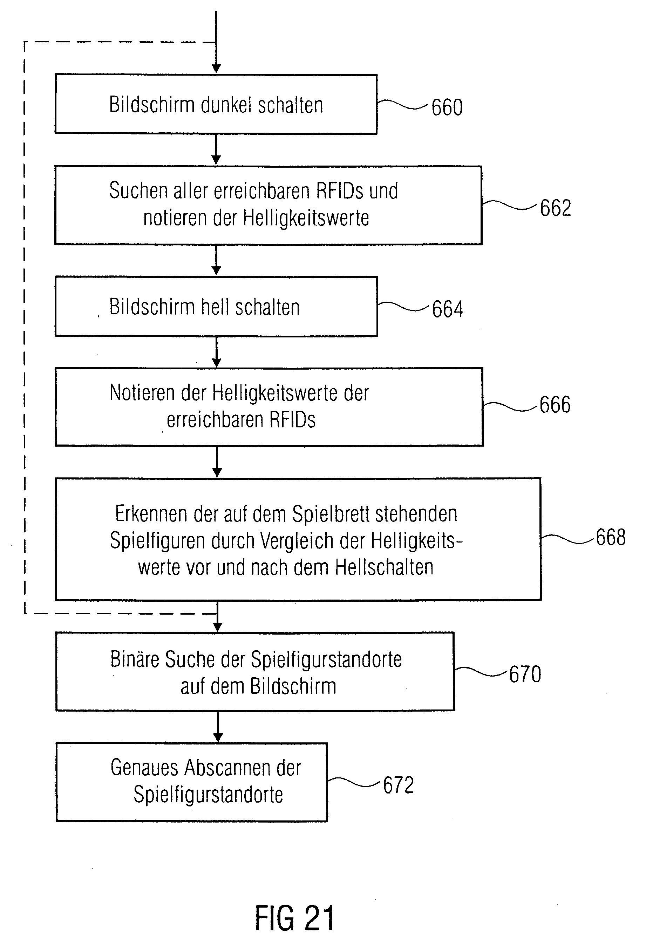

In diesem Spielszenario führt die Vorrichtung von Fig. 17 beispielsweise das Verfahren nach Fig. 21 durch, um die Spielfiguren auf der Anzeige 610 zu lokalisieren und ggf. ihre Orientierung festzustellen. Wie es in Fig. 21 gezeigt ist, beginnt das Verfahren damit, dass die Verarbeitungseinrichtung 620 in dem Computer 612 über die Ansteuereinrichtung 618 die Anzeige 610 anweist, den Bildschirm dunkel zu schalten (Schritt 660). Daraufhin sucht die Verarbeitungseinrichtung 20 über den Sender/Empfänger 614 alle erreichbaren RFIDs 624 bzw. alle erreichbaren Spielfiguren 616 und notiert sich bzw. speichert den Status bzw. den Helligkeitswert des jeweiligen Fotosensors 628, d.h. ob der Fotosensor einer jeweiligen erreichbaren Spielfigur z.B. zum Zeitpunkt der Abfrage dunkel oder hell sieht (Schritt 662). Je nach RFID-Technik, die natürlich lediglich exemplarisch für eine drahtlose Kommunikation 642 ist, können beispielsweise 100 bis 1000 RFIDs und somit 100 bis 1000 Spielfiguren pro Sekunde für die Verarbeitungseinrichtung 620 auffindbar sein. Das Ergebnis des Schrittes 662 ist eine Liste aller in der Nähe des Empfängers 614 befindlichen Spielfiguren, unabhängig davon, ob sie auf dem Spielbrett bzw. der Anzeige 610 sind oder nicht.

Daraufhin schaltet die Verarbeitungseinrichtung 620 des Computers 612 über die Ansteuereinrichtung 618 die Anzeige 610 hell (Schritt 664) und sucht in einem darauffolgenden Schritt 66 wieder alle erreichbaren RFIDs 624 oder notiert sich zumindest den Status der Fotosensoren 628 der erreichbaren RFIDs 624 in Schritt 666. Aus den beiden Helligkeitswerten für jeden erreichbaren RFID 624 ist es der Verarbeitungseinrichtung 620 möglich, diejenigen Spielfiguren 616 zu erkennen, wo sich der Status bzw. der erfasste Helligkeitswert des jeweiligen optischen Sensors 628 um mehr als ein vorbestimmtes Maß geändert hat. Diesen Vergleich der Helligkeitswerte vor und nach dem Hellschalten in Schritt 664 führt die Verarbeitungseinrichtung 620 in Schritt 668 aus. Das Ergebnis des Schrittes 68 sind die auf dem Spielbrett bzw. der Anzeige 610 stehenden Spielfiguren, da anzunehmen ist, dass Spielfiguren, deren Sensorstatus sich geändert hat, auf der Anzeige 610 stehen, während die anderen Spielfiguren nicht auf der Anzeige 610 bzw. dem Spielbrett stehen.

Gegebenenfalls können die Schritte 660 bis 668 ein oder mehrere Male wiederholt werden, um die Sicherheit der Erkennung in Schritt 668 zu erhöhen, wobei sich die Suche bzw. die Notierung in den Schritten 662 und 666 dabei beispielsweise auf die schon bekannten RFIDs beschränken kann. Insgesamt, d.h. mit oder ohne Wiederholung, werden die Schritte 660 bis 668 beispielsweise binnen maximal 2 Sekunden durchgeführt.

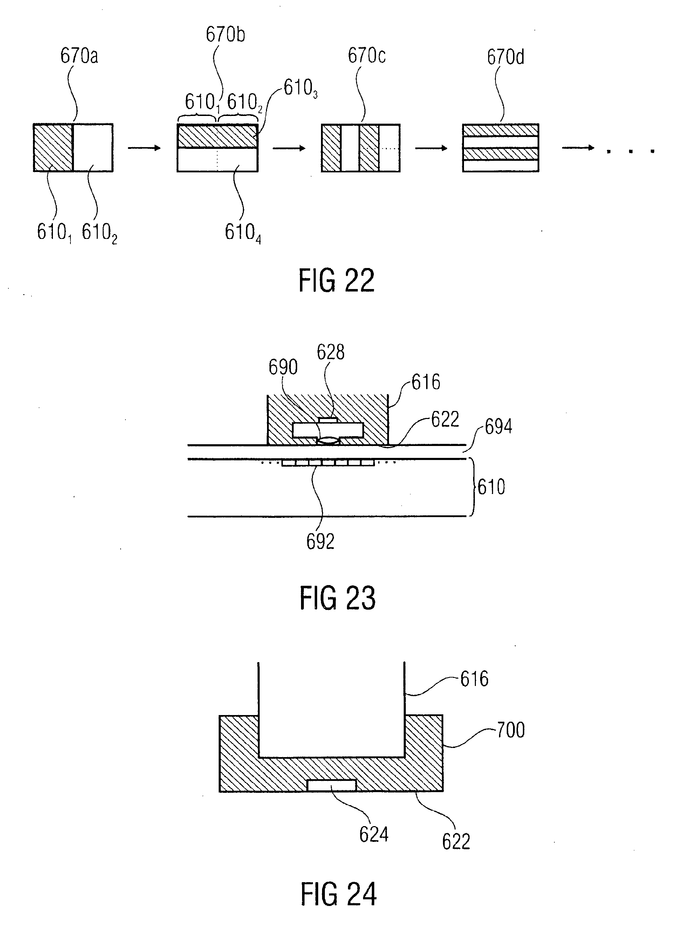

Danach veranlasst die Verarbeitungseinrichtung 620 in dem Computer 612 die Anzeige 610 über die Ansteuereinrichtung 618, schrittweise hälftig zu unterteilen, indem dieselbe beispielsweise zunächst eine Hälfte 610₁ dunkel und eine andere Hälfte 610₂ der Anzeige 610 hell schaltet, in einem nächsten Schritt innerhalb der beiden Hälften wieder eine Hälfte 610₃ dunkel und die andere Hälfte 610₄ hell schaltet und in dem wiederum darauffolgenden Schritt die so definierten Viertel 610₃ erneut in eine dunkle und eine helle Hälfte unterteilt usw. Eine mögliche Abfolge von Bildschirmanzeigen, die auf diese Weise nacheinander in den einzelnen Schritten auf der Anzeige 610 angezeigt werden, ist in Fig. 22 angedeutet, und zwar in der Reihenfolge von links nach rechts mit den exemplarisch lediglich vier dargestellten einzelnen Teilschritten 670a, 670b, 670c, 670d. Während die Verarbeitungseinrichtung 620 in dem Schritt 670 diese binäre Unterteilung durchführt, protokolliert sie für jeden Teilschritt des Schrittes 670, ob der entsprechende optische Sensor 628 anzeigt, dass die Spielfigur auf der hellen Hälfte oder der dunklen Hälfte des Bildschirms steht. Auf diese Weise führt die Verarbeitungseinrichtung 620 in dem Schritt 670 eine "binäre Suche" der Standorte der Spielfiguren 616 durch. Auf Grundlage der protokollierten Rückmeldungen der Spielfiguren 616 bzw. der protokollierten Helligkeitswerte für die einzelnen Teilschritte 670a, 670b, 670c, 670d usw. der binären Suche 670 schließt dann die Verarbeitungseinrichtung 620 auf die Positionen der einzelnen Spielfiguren.

Alternativ ist es möglich, dass die Verarbeitungseinrichtung 620 in dem Schritt 670 die binäre Suche zur Bestimmung, welche Spielfigur sich wo befindet, mit immer kleiner werdenden Lichtflächen durchführt, und zwar dadurch, dass sie erst eine Hälfte, dann ein Viertel, dann ein Achtel usw. des Bildschirms hell bzw. dunkel schaltet und nachsieht, welche Spielfiguren dann hell bzw. dunkel melden. Da pro Feld nach immer weniger und bekannten Figuren gesucht werden muss und somit nur Bereiche genauer bearbeitet werden müssen, auf denen Figuren stehen, ist die binäre Suche in Schritt 670 nicht sehr zeitintensiv.

Wie es aus der Fig. 22 ersichtlich ist, wird die Flächenunterteilung in helle und dunkle Bereiche pro Teilschritt bei der binären Suche 670 immer kleiner. Insbesondere ist es möglich, dass diese Unterteilung so klein wie die Pixelauflösung selbst wird. Insbesondere kann die Aufteilung so fein werden, dass die einzelnen Lichtflächen bei einem Teilschritt kleiner als die optischen Sensoren 628 der Spielfiguren 616, also beispielsweise kleiner als die Stand bzw. Bodenfläche der Figuren 616, sind, so dass die Verarbeitungseinrichtung 620 aus dem protokollierten Rückmeldungen bzw. Helligkeitswerten für die einzelnen Teilschritte 670a - 670d auch die Ränder der Figuren 616 und genau genommen die Ränder der lichtempfindlichen Bereiche der entsprechenden optischen Sensoren 628 bestimmen kann.

Das Ergebnis des Schrittes 670 sind also die Standorte der Spielfiguren 616, die sich auf dem Bildschirm 610 befinden.

In einem nachfolgenden Schritt 672 kann es nun sein, dass die Verarbeitungseinrichtung 620 an jedem Spielfigurenstandort aus Schritt 670 ein genaues Abscannen der Fotosensorausdehnung der optischen Fotosensoren 628 der auf dem Bildschirm 610 befindlichen Spielfiguren 616 durchführt. Das Abscannen sieht beispielsweise das Abscannen mit lediglich einem Pixel bzw. einem Lichtpunkt vor. Beispielsweise befindet sich vor dem Fotosensor 628 jeder Spielfigur 616 eine Maske mit einem geeigneten geometrischen Muster, das beispielsweise lediglich durch Rotation in der Bildschirmebene um mehr als 90 Grad und beispielsweise lediglich durch eine Drehung um 360 Grad in sich selbst überführt werden kann. In diesem Fall kann durch das Abscannen in Schritt 672 gegebenenfalls nicht nur die Position sondern auch die Richtung der Figur 616 bestimmt werden, in die die jeweilige Figur schaut bzw. gerichtet ist. Beispielsweise lassen sich die RFIDs 626 der Spielfiguren 616 über die Sende-/Empfangseinrichtung 614 separat und mit hoher Frequenz ansprechen bzw. abfragen. Beispielsweise sind mehr als 100 Lesevorgänge pro Sekunde möglich, so dass das genaue Abscannen in Schritt 672 für den Benutzer unmerklich und schnell stattfinden kann. Insbesondere ist das genaue Abscannen in Schritt 672 beispielsweise auf die Spielfigurenstandorte begrenzt. Der Aufwand der entsprechenden Mustererkennung zur lateralen Auflösung der Maske kann, wie im Vorhergehenden beschrieben, auf den Computer 612 bzw. die Verarbeitungseinrichtung 620 verlagert sein, indem die Sensoren lediglich ihre Helligkeitswerte übermitteln. Die Spielfiguren 616 benötigen lediglich die Maske oder entsprechend geformte Fotosensoren 628. Runde Fotosensoren bzw. runde Masken sind möglich, falls keine Orientierung der Spielfiguren bei dem jeweiligen Spiel erfasst werden muss.

In Fig. 23 wird gezeigt, dass die Spielfigur 616 gegebenenfalls noch eine Linse 690 an ihrer Stellfläche 622 aufweisen kann, wie z.B. eine Kunststofflinse, die zur Verbesserung der optischen Eigenschaften die Pixel 692 der Anzeige 610 auf den optischen Sensor 628 bzw. die Maske (nicht gezeigt) derselben abbildet. Beispielsweise überbrückt damit die Linse 690 einen Abstand zwischen der Stellfläche 622 und den Pixeln 692 der Anzeige 610, der durch eine Schutzscheibe 694 definiert wird, die zum Schutz des Bildschirms 610 vor mechanischen Beschädigungen oder dergleichen zwischen dem Bildschirm bzw. der Anzeige 610 und der Spielfigur 616 befindlich und ansonsten durchsichtig ist. Durch die Verwendung der Linse 690 könnte auf diese Weise auch eine negative Auswirkung von Verschmutzungen auf der Bodenfläche 622 der Spielfigur 616 verringert werden, da sich dann der Schmutz nicht in der Objektebene sondern in der Nähe der Linsenebene befindet.

Natürlich wird darauf hingewiesen, dass das zuletzt anhand der Fig. 21 bis 23 beschriebene Ausführungsbeispiel auch so durchgeführt werden kann, dass die zuvor beschriebene Mustererkennung innerhalb der Spielfiguren, d.h. innerhalb der Verarbeitungseinrichtung 630, durchgeführt wird.

Schließlich wird noch darauf hingewiesen, dass es möglich ist, Spielfiguren oder eine Spielfigur auf der Anzeige 610 während einer Bewegung derselben über die Anzeige 610 zu verfolgen. Dazu werden die Spielfiguren bzw. wird das Objekt beispielsweise mit einer ausreichend hohen Frequenz gescannt. Auf diese Weise können sowohl Verschiebungen aus der Mittellage als auch Verdrehungen detektiert werden. Auf diese Weise können die Spielfiguren nachverfolgt werden, während sie von dem Benutzer über das Spielfeld bzw. die Anzeige 610 gezogen werden.

Ferner soll schließlich Fig. 24 noch einmal explizit zeigen, dass es möglich ist, dass die Sendeeinrichtung 624 dazu vorgesehen sein kann, nicht fest mit der eigentlichen Spielfigur 616 verbunden zu sein, sondern an derselben erst befestigt zu werden. Gemäß Fig. 24 ist die Sendeeinrichtung 624 beispielsweise in einem Sockel 600 angeordnet, in den eine Spielfigur 616 gesteckt, geschraubt oder auf andere Weise befestigt werden kann. Fig. 25 zeigt schließlich in Aufsicht eine mögliche Anordnung einer Blende 710, die eine lichtempfindliche Fläche des optischen Sensors, wie z.B. einer Fotozelle, 628 bedeckt und einen Öffnung 712 aufweist, die den effektiv wirksamen lichtempfindlichen Bereich des optischen Sensors 628 festlegt, da nur duch dieselbe Licht von der Anzeige auf den Sensor 628 treffen kann. Zudem ist exemplarisch gezeigt, dass die Ausdehnung letzteren Bereiches 712 größer als die Pixel sein kann, die stellvertretend für alle Pixel mit 714 angezeigt sind. Natürlich wäre es auch möglich, dass der Sensor selbst in der Form 712 ausgebildet wird, in welchem Fall eine Blende fehlen kann. Die in Fig. 25 gezeigt Blende ermöglicht die zuvor beschriebene genaue Orts- und Orientierungsbestimmung durch beispielsweise Abscannen der Gegend um die Öffnung 712 herum mit einer Charakteristik, die lediglich ein Pixel 714 groß ist, wie z.B. einem sich hell und dunkel abwechselnden Pixel. Auf diese Weise nämlich kann die Bestimmungseinrichtung diejenigen Pixel 714 bestimmen, die mit dem Feld 712 mehr als ein vorbestimmtes Ausmaß überlappen. Das Antwortsignal, das von dem Sensor 628 über den Sender an die Bestimmungseinrichtung gesendet wird, ist beispielsweise binär und zeigt an, ob der erfasste Helligkeitswert zu einem Zeitpunkt, wie z.B. dem aktuellen Abfragezeitpunkt, ein vorbestimmtes Maß überschreitet, das dem vorbestimmten Überlappungsausmaß entspricht. Natürlich kann das Antwortsignal natürlich auch den Helligkeitswert in genaueren Stufen anzeigen.

In der vorhergehenden Beschreibung der Fig. 16 - 25 wurde die Existenz der Bewegungseinrichtung 16 und der Ansteuereinrichtung 18 lediglich schematisch angedeutet. Dass die in den vorangegangenen Fig. 2 - 16 beschriebenen Ausführungsbeispiele sehr gut dafür geeignet sind, mit den Ausführungsbeispielen nach Fig. 16 - 25 kombiniert zu werden, wird im Folgenden noch mal anhand der Fig. 26a - 26b veranschaulicht, die Ausführungsbeispiele anzeigen, wie die Anzeige der Lagebestimmungseinrichtung nach den Ausführungsbeispielen der Fig. 16 - 25 mit den vorangegangenen Ausführungsbeispielen für die Bewegungseinrichtung 16 kombiniert werden bzw. relativ zueinander angeordnet werden kann.

Wie es im Vorhergehenden bereits beschrieben worden ist, ist es möglich, eine Platte mit individuell ansteuerbar Düsenventilen gemäß den Vergleichsbeispielen von Fig. 2 - 8 durchsichtig bzw. transparent herzustellen. Diese Vergleichsbeispiele sind deshalb gemäß Fig. 26a mit denjenigen von Fig. 16 - 25 dadurch kombinierbar, dass eine solche Luftventilplatte 800 oberhalb einer Anzeige 802 angeordnet wird, die ihrerseits eine Abdeckplatte 804 umfassen kann und der Anzeige 610 aus den Ausführungsbeispielen von Fig. 16-25 entspricht. Zwischen der Luftventilplatte 800 und der Anzeige 802 ist ein Zwischenraum 806 vorgesehen, der als Druckkammer dient, deren Druckluft durch die aktivierten Luftventile in der Platte 800 an der Transportoberfläche 12 entweicht. Die Transparenz der Platte 800 gewährleistet somit, dass das durch die Pixel 808 der Anzeige 802 erzeugte Bild durch die Abdeckplatte 804, die natürlich auch transparent ist, sowie durch die Druckkammer 806 und durch die Luftventilplatte 800, deren der Anzeige 802 abgewandte Seite die Transportoberfläche 12 bildet, hindurch für einen Betrachter sichtbar ist. Der vorerwähnte optische Sensor in dem Objekt kann in dem exemplarischen Fall der Ausgestaltung des Bodens des Objekts gemäß Fig. 3 oder Fig. 8 in einer der Ausnehmungen, wie z.B. in der mittleren Ausnehmung, somit die lateral variierende Information, die durch die Anzeige 802 angezeigt wird, erkennen und ggf. über den Sender das Abtastergebnis weiterleiten.

Ein entsprechender Querschnitt eines möglichen Objekts bzw. einer möglichen Spielfigur ist in Fig. 26b veranschaulicht, wobei die Anordnung des optischen Sensor gemäß Fig. 23 nur exemplarisch ist.

Wie es bereits in Fig. 15a angedeutet worden war, ist es möglich, die Ausführungsbeispiele von Fig. 16 - 25 mit dem Ausführungsbeispiel der Fig. 14 - 15b dadurch zu kombinieren, dass die Anzeige einfach unter der Biegewellenplatte angeordnet wird. Dabei wird aber darauf hingewiesen, dass es ferner möglich sein sollte, Biegewellen auch in einer Glasplatte zu erzeugen, die gemäß dem Ausführungsbeispiel von Fig. 6a und 6b Löcher für die Luftventile aufweist, in welchem Fall auf diese Weise auch die Ausführungsbeispiele der Fig. 2 - 8 mit denjenigen von Fig. 14 - 15b kombiniert werden könnten, und zwar mit eventueller gleichzeitiger Kombination der Ausführungsbeispiele von Fig. 16 - 20.

In anderen Worten ausgedrückt ermöglichen es die oben genannten Ausführungsbeispiele einem Spielecomputer eine passive Spielfigur auf einem Spielbrett kontrolliert und "frei" in Bezug auf Position und Ausrichtung der Spielfigur zu bewegen. Es ist zudem möglich, gezielt eine Kraft auf diese Figur auszuüben, wobei Position, Richtung und Stärke dieser bewegenden Kraft in gewissen Grenzen innerhalb der Spielplanebene steuerbar sind. Sogar ein Drehen der Spielfiguren auf der Stelle ist möglich. Dazu greifen zwei Kraftvektoren an der Figur an, die entgegengesetzte Komponenten innerhalb der Spielplanebene enthalten und an verschiedenen Punkten der Figur angreifen, wie es in den Fig. 4b und 6b sowie 12b und 13b der Fall war. Wenn n Figuren gleichzeitig bewegt werden sollen, müssen entsprechend n mal so viele Kraftvektoren angesteuert werden, was jedoch grundsätzlich kein Problem darstellt.

Unter Umständen besitzen die Spielfiguren leicht voneinander abweichende Eigenschaften, wie z.B. ihre Reibung am Spielbrett, ihr Gewicht usw. Dies stellt aber kein Problem dar, da die Ansteuereinrichtung einen Rückkopplungsmechanismus realisiert, der jeweils die aktuelle Position und Ausrichtung der Spielfiguren berücksichtigt und gegebenenfalls an den Spielecomputer zurückmeldet.

Die obigen Ausführungsbeispiele erfüllen also die Anforderung von Spielvorrichtungen, bei denen es häufig einer großen Menge von Kraftvektoren bedarf, die in ihrer Position, Richtung und Stärke frei steuerbar sein müssen. Die obigen Ausführungsbeispiele nutzen dabei aus, dass die Steuerung dieser Größen nicht beliebig fein auflösbar sein muss. Vielmehr sind Quantisierungsstufen zulässig, die von den Eigenschaften der verwendeten Spielfiguren, wie z.B. von deren Größe abhängen. Wenn z.B. der Durchmesser der kleinsten verwendeten Figur zehn Millimeter ist, so wird es genügen, die Position des Kraftvektors mit beispielsweise einer Auflösung von 1/4 dieses Durchmessers, also beispielsweise 2,5 mm steuern zu können. Die genauen Werte hängen von der jeweiligen Implementierung ab.

Auch die Stärke des auf die Figuren einwirkenden Kraftvektors kann von der Ansteuereinrichtung festgelegt werden. Durch die Lagebestimmungseinrichtung ergibt sich ein geschlossener Regelkreis mit der Regelgröße Position bzw. Geschwindigkeit des Objekts bzw. der Spielfigur und den Stellgrößen Richtung und Stärke des "Kraftvektors". Die Ansteuereinrichtung kann einen PID-Regler realisieren, so dass die Stärke des Kraftvektors so angepasst werden kann, dass eine möglichst stabile Bewegung erreicht wird und gleichzeitig Nebenwirkungen auf andere Spielfiguren verhindert bzw. minimiert werden. Beispielsweise kann die Ansteuereinrichtung den Kraftvektor von einem Minimalwert so lange erhöhen, bis eine Bewegung der gewünschten Spielfigur eintritt und diesen Kraftvektor dann erhalten bzw. wegen wegfallender Haftreibung sogar verringern. Die Quantisierung der Kraft erfolgt beispielsweise über Zuschaltung weiterer Luftventile in den Vergleichsbeispielen von Fig. 2 - 8, oder sogar über Einstellung des Luftdrucks, der an den Luftventilen anliegt. Auch die Biegewellen sind in ihrer Stärke steuerbar. Und schließlich ist auch der Strom durch die Magnetspulen in den Vergleichsbeispielen der Fig. 9a - 15b steuerbar.

Die Lagebestimmungseinrichtung kann dazu verwendet werden, auch die Positionen aller nicht zu bewegenden Figuren zu überprüfen und, falls notwendig, kann die Ansteuereinrichtung geeignete zusätzlich Kraftvektoren einsetzen, um diese nicht zu bewegenden Figuren stabil zu halten.

Insbesondere zeigten die obigen Ausführungen drei verschiedene physikalische Möglichkeiten, die soeben angesprochenen Kraftvektoren zu erzeugen, nämlich einerseits durch Biegewellen in einer beispielsweise durchsichtigen gegebenenfalls dünnen Platte, wie z.B. einer Plexiglasplatte, die über dem Spielplan, wie z.B. einem Bildschirm in dem Fall der Ausführungsbeispiele von Fig. 16 - 25, liegen kann. Eine weitere Möglichkeit bestand in der Verwendung magnetischer Felder, die von einer steuerbaren Matrix von Elektromagneten unter dem als Spielplan dienendem Bildschirm erzeugt werden. Schließlich kann auch Druckluft verwendet werden, die über steuerbare Ventile in einer beispielsweise durchsichtigen dünnen Platte über dem Spielplan gezielt an den Positionen entweicht, wo die Spielfigur steht. Darüber hinaus wurden weitere Ausführungsbeispiele beschrieben, die mehr oder weniger von den soeben erwähnten physikalischen Möglichkeiten Gebrauch machten.

Je nach gegebenen Randbedingungen, wie z.B. der Art, der Form und der Größe der zu bewegenden Spielfiguren, kann es vorteilhaft sein, eine oder auch mehrere der oben aufgeführten Kraftquellen, d.h. Biegewellen, magnetische Felder bzw. Druckluft, zur Implementierung zu verwenden, wie es auch im Vorhergehenden angedeutet worden ist. So kann beispielsweise durch Druckluft die Reibung unter einer Figur bzw. einem Teilbereich des Spielplans gezielt vermindert werden, nämlich durch den entstehenden Luftkisseneffekt, um sie dann zu bewegen.

Die obigen Ausführungsbeispiele sind somit ohne weiteres im Bereich der Spiele, insbesondere dem Bereich der Brettspiele, einsetzbar. Insbesondere sind sie in Computerspielen einsetzbar, die es einem Spielecomputer ermöglichen, physikalische Spielfiguren effizient und automatisch, d.h. ohne Eingreifen eines Menschen, auf einem Spielbrett zu bewegen.

Dabei sind die obigen Ausführungsbeispiele wie gezeigt in der Lage, mit einem Bildschirm als Spielbrett kombiniert zu werden, wobei der Computer die Position der Spielfiguren sogar vermittels des Bildschirms automatisch erfassen kann, wie es im Vorhergehenden beschrieben worden ist.

Die obigen Ausführungsbeispiele lösen auch das häufig mit Spielen verbundene Problem, dass gleichzeitig mehrere Spielfiguren bewegt werden müssen. Dabei benötigen die oben genannten Ausführungsbeispiele überhaupt keinen oder zumindest fast keine beweglichen Teile.

Zu dem Vergleichsbeispiel von Fig. 14 - 15b wird noch mal darauf hingewiesen, dass für die Platte gegebenenfalls vorzugsweise eine dünne Platte verwendet werden kann. Da sich die Oberflächenpunkte der Platte in einer elliptischen Kurve bewegen, wobei die Bewegung beim Wellenberg in die eine und im Wellental in die andere Richtung verläuft, ist es möglich, durch die Oberflächenwellenpunkte auf dem Wellenberg, auf der ja das Objekt liegt, das zu transportieren ist, zu bewegen, nämlich dadurch, dass der Gegenstand, wie z.B. eine Spielfigur, der hauptsächlich Kontakt mit den Punkten des Wellenberges aufweist, eine Reibungskraft in die Richtung erfährt, in die sich die Oberflächenpunkte des Wellenberges bewegen.

Die Ansteuereinrichtung kann nun die Wellenformen in der Platte mit ausreichender Genauigkeit so steuern, dass unter jeder zu bewegenden Spielfigur Wellenberge mit ausreichender Amplitude und geeigneter Richtung "durchlaufen" bzw. unter den nicht zu bewegenden Figuren eventuelle Wellenberge ausreichend klein bleiben. Dadurch kann die Ansteuereinrichtung gezielt gewünschte Objekte bewegen bzw. in eine gewünschte Soll-Lage versetzen. Für eine Rotation eines Objekts bzw. einer Spielfigur kann die Ansteuereinrichtung beispielsweise gegenläufige Wellenzüge an gegenüberliegenden Rändern der Auflagefläche des Objekts erzeugen, die an diesen gegenüberliegenden Rändern in entgegengesetzte Richtungen Kräfte erzeugen bzw. angreifen. Die Ansteuereinrichtung kann hierzu auf die Wellenfeldsynthese zurückgreifen, um ein fast beliebiges Wellenfeld zu erzeugen. Eine solche Wellenfeldsynthese ist aus dem Bereich der Akustik bereits hinlänglich bekannt. Dementsprechend kann, wie es im Vorhergehenden Bezug nehmend auf Fig. 18a und 18b beschrieben worden ist, die Transportoberfläche mit einer großen Anzahl von Biegewellenerzeugungseinrichtungen, wie Piezoelementen, umgeben werden, von denen jedes eine Elementarwelle liefert, die sich nach dem Huygensschen Prinzip zum gewünschten Wellenfeld überlagern.

Gegebenenfalls ist es vorteilhaft, wenn die Biegewellenerzeugungseinrichtungen einen gewissen Minimal-Abstand zueinander nicht überschreiten. Dieser Minimal-Abstand kann von der Frequenz abhängen, mit der die Biegewellenerzeugungseinrichtungen die Biegewellen erzeugen. Die Ansteuereinrichtung 18 kann somit ausnützen, dass das Wellenfeldsyntheseprinzip auch in festen Körpern und dem Ultraschallbereich funktioniert. Die Biegewellen können beispielsweise Wellenlängen kleiner als die Abmessungen der Spielfiguren bzw. des zu transportierenden Objekts aufweisen. Beispielsweise erzeugen Schallquellen, wie die soeben erwähnten Piezoelemente, ein geeignetes Wellenfeld mit Wellenzügen ausreichend hoher Frequenz in der dünnen Platte, wobei die Schallquellen beispielsweise entlang des Randes der Platte in einem geeignet kleinen Abstand zueinander angeordnet sind. Wie im Vorhergehenden erwähnt, kann dabei die Platte vorzugsweise mit einem akustischen Wellenwiderstand abgeschlossen sein, um unerwünschte Reflexionen am Rand zu begrenzen. Je nach Anwendungsfall können auch weniger Biegewellenerzeugungseinrichtungen mit einem größeren Abstand zueinander ausreichen. In anderen Worten ausgedrückt kann je nach Anwendungsfall auch ein Wellenfeld ausreichen, das mit einer verringerten Anzahl von Elementarwellen bzw. weniger Biegewellenerzeugungseinrichtungen erzeugt worden ist.

Die Fig. 26c hat auch gezeigt, dass es möglich ist, unter einer Anzeige bzw. einem dünnen Flachdisplay als Spielplan, eine Matrix von einzeln ansteuerbaren kleinen Spulen vorzusehen, deren Ausrichtung vertikal zum Spielplan ist. Auf diese Weise lässt sich durch geeignete Ansteuerung dieser Magnetspulen ein steuerbares Magnetfeld in der Ebene des Spielplans erzeugen. Letzteres kann entweder "quasistatisch" oder auch nach den Prinzipien des Linearmotors zur Bewegung der Spielfiguren verwendet werden, wofür letzteres Fig. 10c ein Ausführungsbeispiel war. Die Spielfigur von Fig. 26b kann dazu beispielsweise verwendet werden, wenn sie gemäß einer der Fig. 10a-10c ein magnetisch anzieh- oder abstoßbares Element aufweist.

Bei der quasi-statischen Lösung befinden sich in den Spielfiguren beispielsweise kleine Permanentmagnete und die Magnetspulen unter dem Spielbrett werden einfach dazu verwendet, um Zug- bzw. Schubkräfte auf diese Permanentmagnete auszuüben. Dadurch entstehen die gewünschten Kraftvektoren und bei ausreichend feinem Raster der Magnetspulen und geeigneter Ansteuerung der Spulen kann in Verbindung mit der oben beschriebenen Rückkopplung durch die Lagebestimmungseinrichtung die gewünschte Bewegung der Figuren erreicht werden. Werden sogar zwei oder mehr Permanentmagnete in der Spielfigur untergebracht, so kann, wie es im Vorhergehenden Bezug nehmend auf Fig. 12a - 13b veranschaulicht worden ist, eine in der einen und eine in der gegenüberliegenden Seite des Spielbodens vorgesehen werden, wodurch die Figur leicht gedreht werden kann, wenn auf den beiden Seiten Magnetfelder in die entsprechende Richtung ziehen oder schieben. Bei geeignetem Aufbau der Spielfigur kann der Schubeffekt auch dazu genutzt werden, um beispielsweise durch einen unter dem Schwerpunkt der Figur angebrachten Magneten das auf der Unterlage lastende Gewicht der Figur zu verringern und so das Schieben bzw. Ziehen der Figur zu erleichtern.

Bei der Linearmotor-Lösung gemäß Fig. 10c befinden sich kleine Magnetspulen in den Spielfiguren, die als "LäuferSpulen" dienen, du in den Strom durch Magnetfeldänderungen induzierbar ist. Die Magnetspulen unter dem Spielbrett sind die Erregerspulen, die das bewegte Magnetfeld erzeugen, das die Kräfte auf die Läuferspulen ausübt. Bei geeigneter Implementierung der Erregerspulen, wie z.B. einem geeigneten Abstand zu den Läuferwicklungen und "Aufösung" der Erregerspulenmatrix, können die Kräfte auf die einzelnen Läuferspulen direkt ausreichend voneinander entkoppelt werden, um die gewünschten individuellen Bewegungen der Spielfiguren durchzuführen. Eine andere Implementierungsmöglichkeit besteht darin, die Läuferspulen 110 in den Spielfiguren "schaltbar" zu machen, und somit die Läuferspulen einzeln aktivierbar zu machen, indem beispielsweise ein Schalter oder ein steuerbarer Widertand in den Zweig parallel zur eigentlichen Spule 110 geschaltet ist. Das bewegende Magnetfeld kann dann großräumiger ausfallen, was eventuell den Aufbau der Erregermatrix bzw. der Magnetfeldspulenmatrix vereinfacht. Durch Selektion der gewünschten Läuferspulen können gewünschte Figuren bewegt und gedreht werden.

Die Spielfiguren bzw. das zu bewegende Objekt kann eventuell drahtlos von Außen, wie z.B. durch die Ansteuereinrichtung, individuell angewiesen werden, die entsprechenden Schaltelemente der Läuferspulen zu öffnen oder zu schließen.

Die obigen Ausführungsbeispiele aus Fig. 2 - 8 bezogen sich auf ein Prinzip, wonach ein Gegenstand auf einem Luftkissen "schwebt". Die Luft für das Luftkissen stammt beispielsweise aus vielen feinen Löchern bzw. Luftdüsen einer Bodenplatte. Sie kann, wie es im Vorhergehenden beschrieben worden ist, als durchsichtige Platte ausgebildet sein, die über einem Spielbrett, wie z.B. eben einer Anzeige, angeordnet ist. Auf der Platte kann somit der gewünschte Gegenstand, wie z.B. eine Spielfigur, schweben. Das Luftkissen unter der Spielfigur hebt die Reibung zwischen Figur und Bodenplatte auf, so dass sie leicht in eine Richtung bewegt werden kann.

Wie es im Vorhergehenden beschrieben worden ist, ist es möglich, den Luftkisseneffekt zur Reibungsverminderung in Verbindung mit den anderen physikalischen Bewegungsmöglichkeiten bzw. beschriebenen Kräften zur Bewegung zu kombinieren.
Zu der bereits mehrmals erwähnten durchsichtigen Platte mit individuell steuerbaren Luftventilen sei erwähnt, dass dieselbe eine dünne, elektrisch nicht leitende Kunststoffplatte sein kann. Zur Herstellung der individuell steuerbaren Luftventile werden beispielsweise mit einem Laser sehr feine kurze Schlitze in die nicht leitende Kunststoffplatte geschnitten, die als Ventile dienen können. Über elektrostatische Kräfte können diese Schlitze aufgehalten oder zugezogen werden. Dazu können die Schlitze, wie im Vorhergehenden beschrieben, mit einem durchsichtigen leitfähigen Material beschichtet und zu einem späteren Zeitpunkt mit einer nicht leitenden durchsichtigen Deckschicht versehen werden. Die Seiten der Schlitze bilden so quasi einen "Plattenkondensator". In weiteren Schritten kann auf Oberund Unterseite der Bodenplatte aus geeignetem durchsichtigen Material eine Matrix von Leiterbahnen und Transistoren so aufgebracht werden, dass jeder der Seiten der Schlitze individuell adressiert und geladen werden kann.

Werden die Seiten der Schlitze nun mit Ladung der gleichen Polarität versehen, so stoßen sie sich voneinander ab, und halten das Luftventil offen, wohingegen sie, wenn sie mit Ladung unterschiedlicher Polarität versehen werden, sich anziehen und das Ventil geschlossen halten, wie es im Vorhergehenden beschrieben worden ist. Gegebenenfalls ist es vorteilhaft, wenn die Platte hierzu eine ausreichende Flexibilität besitzt.

Gemäß einem alternativen Ausführungsbeispiel werden zwei übereinander liegende Folien dazu verwendet, elektrostatische Ventile auszubilden.

Die Bodenplatte der Spielfiguren kann so ausgebildet sein, dass mittels der steuerbaren Luftventile geeignete Bewegungskräfte auf die Figuren ausübbar sind, die sie lateral versetzen. Eine mögliche Formgebung besteht, wie im Vorhergehenden beschrieben, darin, dass die Bodenplatte der Figur in mehrere Bereiche aufgeteilt wird, die durch kleine Ränder voneinander abgegrenzt sind. Über die Luftventile können die Elemente getrennt mit Luft versorgt werden. In der Mitte der Figur kann ein Element angebracht sein, dessen Umrandung geschlossen ist und das ein tragendes Luftkissen bildet. Rund um diese Elemente können weitere Elemente angeordnet sein, deren Umrandung nicht komplett geschlossen ist. An der Öffnung der Umrandung entsteht eine "Schubdüse", die je nach Form einen Schub längs oder quer zur Figur erzeugen kann, falls das Element mit Luft versorgt wird. Hierzu sei noch einmal auf die Beschreibung der Fig. 3, 4a und 4b verwiesen. Zur Figurbewegung kann also das zentrale Element mit Luft versorgt werden, um das tragende Luftkissen zu aktivieren und damit eine Reibungsverminderung zu erzielen, und ein oder mehrere weitere Elemente können mit Luft versorgt werden, wodurch eine gewünschte Bewegungskraft in eine gewünschte Richtung oder eine gewünschte Drehbewegung erzeugt wird.

Durch die obigen Ausführungsbeispiele ist es somit nicht notwendig, einen Roboter-Greifarm zu verwenden, um Objekte auf einer Oberfläche zu bewegen. Aktive Bewegungselemente an den Spielfiguren sind nicht nötig. Die Kraftvektoren werden vielmehr ohne bewegte Elemente erzeugt, wenn man bei den vorhergehenden Ausführungsbeispielen von elektrostatischen Luftventilen oder den Piezoelementen für die Biegewellenerzeugung absieht. Mehrere Figuren lassen sich durch die vorhergehenden Ausführungsbeispiele auf einmal drehen bzw. bewegen. Die Kraftvektorerzeugung kann ausschließlich "von unten" stattfinden. Der Raum über dem Spielplan bzw. über der Transportoberfläche kann deshalb freigehalten werden. Insbesondere ermöglichen die obigen Ausführungsbeispiele ein "anfassbares" Brettspielinterface für einen Spielecomputer. Der Computer kann die Züge des Menschen erfassen und er kann seine Züge bzw. Züge von Menschen an anderen Orten direkt mit den physischen Spielfiguren durchführen. Eine Spielanordnung eignet sich für "beliebige" Spiele, die einen Spielplan und Spielfiguren verwenden.

Zu den im Vorhergehenden erwähnten individuell ansteuerbaren Luftventile sei noch hinzugefügt, dass das verwendete Material, wie z.B. Silikon, vorteilhaft eine ausreichende Flexibilität besitzen sollte, um den Luftspalt ausreichenden öffnen und schließen zu können. Wie im Vorhergehenden erwähnt, kann als ausführende Kraft eine elektrostatische Kraft aufgrund elektrischer Felder verwendet werden. Die so entstehenden Kondensatorplatten können durchsichtig gebildet sein. Je nach Anwendungsfall kann es ausreichen, auch lediglich eine Elektrode bzw. eine Platte der Kondensatorplatten jedes individuell ansteuerbaren Ventils ansteuerbar zu machen, wenn beispielsweise als andere Platte der Kondensatorplatten bzw. als andere Elektrode eine Zone mit permanenter Ladung in der Gegend bzw. auf der einen Seite des Schlitzes des individuell ansteuerbaren Luftventils eingebracht wird. Wie im Vorhergehenden erwähnt, können die Silikonluftventile in einer stabilen Trägerplatte aus beispielsweise Glas sitzen, die Löcher in der Größe der Ventile aufweist. Der Brechungsindex der Silikonventile und des Glases können so gewählt sein, dass er identisch ist, wie z.B. 1,43 beträgt. Dadurch kann gewährleistet werden, dass es keine Unstetigkeitsstellen an den Übergängen der Glasplatte zu den Silikonventilen gibt, so dass die Transparenz nicht gestört wird.

Im Hinblick auf das Ausführungsbeispiel nach Fig. 14 - 15b wird darauf hingewiesen, dass für einen Bewegungseffekt auch die Erzeugung einer stehenden Welle verwendet werden könnte. Die Ansteuereinrichtung könnte die Bewegungseinrichtung 16 so ansteuern, dass bei geeigneter Formung der Unterseite des zu bewegenden Objekts bzw. der Spielfigur das Objekt bzw. die Spielfigur in den "Tälern" der stehenden Welle aufliegt. Wird die stehende Welle dann langsam bewegt, wie z.B. durch langsames Verstellen der Phase einer der erzeugenden Wellenzüge, so würde die Spielfigur durch die Wellenberge mitgezogen werden. Befinden sich an der Spielfigur getrennte Zonen mit entsprechenden Ausformungen, so kann die Figur auch durch zwei unterschiedliche stehende Wellen gedreht werden.

Abhängig von den Gegebenheiten können die oben beschriebenen Verfahren, wie z.B. die Verfahren zur Lokalisation und Identifizierung von Objekten auf einer Anzeige bzw. die Verfahren zur Bewegung von Objekten auf einer Oberfläche in Hardware oder in Software implementiert werden. Die Implementierung kann auf einem digitalen Speichermedium, insbesondere einer Diskette, einer CD oder DVD, mit elektronisch auslesbaren Steuersignalen erfolgen, die so mit einem programmierbaren Computersystem zusammenwirken können, dass das jeweilige Verfahren ausgeführt wird. Allgemein besteht die Erfindung somit auch in einem Softwareprogrammprodukt bzw. einem Computerprodukt bzw. einem Programmprodukt mit einem auf einem maschinenlesbaren Träger gespeicherten Programmcode zur Durchführung des erfindungsgemäßen Verfahrens, wenn das Softwareprogrammprodukt auf einem Rechner oder auf einem Prozessor abläuft. In anderen Worten ausgedrückt kann die Erfindung somit als ein Computerprogramm bzw. Softwareprogramm bzw. Programm mit einem Programmcode zur Durchführung des Verfahrens realisiert werden, wenn das Programm auf einem Prozessor abläuft. Der Prozessor kann hierbei von einem Computer, einer Chipkarte, einem Spielecomputer oder einem anderen integrierten Schaltkreis gebildet sein.

## Patentansprüche

1. Vorrichtung zum Bewegen eines Objekts (10) über eine Oberfläche (12), mit
einer Biegewellenerzeugungseinrichtung (141) zum Erzeugen von Biegewellen in der Oberfläche (12);
einer Einrichtung (14) zum Bestimmen einer Lage des Objekts (10) auf der Oberfläche; und
einer Einrichtung (18) zum Steuern der Biegewellenerzeugungseinrichtung (141), so dass sich das Objekt (10) aufgrund der Biegewellen seiner gewünschten Lage auf der Oberfläche (12) annähert,
wobei die Einrichtung (18) zum Ansteuern ausgebildet ist, um die Biegewellenerzeugungseinrichtung (141) gemäß einer Wellenfeldsynthese und unter Ausnutzung einer resultierenden tangential zu der Oberfläche verlaufenden Bewegungskomponente von Oberflächenpunkten der Oberfläche an den durch die Biegewellenerzeugungseinrichtung erzeugten Oberflächenwellenbergen (144) so zu steuern, dass sich das Objekt (10) der gewünschten Lage nähert.

2. Vorrichtung gemäß Anspruch 1, bei der die Biegewellenerzeugungseinrichtung (141) eine Mehrzahl von Körperschallerzeugungseinrichtungen (160) aufweist, die entlang eines Rands der Oberfläche angeordnet sind.

3. Vorrichtung gemäß Anspruch 1 oder 2, wobei die Oberfläche (12) durch eine Platte (150) gebildet wird, die an ihrem Rand einen Biegewellenreflexionsdämpfungsabschluss aufweist.

4. Vorrichtung gemäß einem der Ansprüche 1 bis 3, bei der die Einrichtung (14) zum Bestimmen einer Lage des Objekts auf der Oberfläche folgende Merkmale aufweist:
eine Anzeige (610), wobei die Oberfläche in Betrachterrichtung vor der Anzeige angeordnet ist, wobei die Anzeige für einen Betrachter durch die Oberfläche hindurch sichtbar ist;
eine Ansteuereinrichtung (618) zum Ansteuern der Anzeige derart, dass dieselbe eine lateral variierende Information anzeigt;
einen optischen Sensor (628), der in oder an dem Objekt (10) untergebracht ist, zum optischen Abtasten einer Auflagefläche, auf der der ebene Boden des Objekts aufliegt, um ein Abtastergebnis bezüglich der lateral variierenden Information zu erhalten; und
eine Bestimmungseinrichtung zum Bestimmen der Lage des Objekts abhängig von dem Abtastergebnis.

5. Vorrichtung gemäß einem der Ansprüche 1 bis 4, die ferner eine Düsenplatte aufweist, die die Oberfläche bildet und eine Mehrzahl von Düsen in der Oberfläche aufweist, durch die Druckluft leitbar ist, um ein Luftkissen zwischen dem Objekt und der Oberfläche zu bilden.

6. Verfahren zum Bewegen eines Objekts (10) über eine Oberfläche (12) mittels Biegewellen, wobei das Verfahren folgende Schritte aufweist:
Bestimmen einer Lage des Objekts (10) auf der Oberfläche; und
Erzeugen von Biegewellen in der Oberfläche (12), so dass sich das Objekt (10) aufgrund der Biegewellen seiner gewünschten Lage auf der Oberfläche (12) annähert,
wobei die Erzeugung der Biegewellen gemäß einer Wellenfeldsynthese und unter Ausnutzung einer resultierenden tangential zu der Oberfläche verlaufenden Bewegungskomponente von Oberflächenpunkten der Oberfläche an den durch die Biegewellenerzeugungseinrichtung erzeugten Oberflächenwellenbergen (144) so durchgeführt wird, dass sich das Objekt (10) der gewünschten Lage nähert.

7. Computer-Programm mit einem Programmcode zur Durchführung des Verfahrens nach Anspruch 6, wenn das Computer-Programm auf einem Computer abläuft.

## Claims

1. A device for moving an object (10) across a surface (12), comprising:
a bending wave generation means (141) for generating bending waves in the surface (12);
a means (14) for determining a position of the object (10) on the surface; and
a means (18) for controlling the bending wave generation means (141), so that the object (10) approaches its desired position on the surface (12) based on the bending waves,
wherein the means (18) for controlling is implemented to control the bending wave generation means (141) according to a wave field synthesis and using a resulting component of movement, passing tangentially to the surface, of surface points of the surface at the surface wave peaks (144) generated by the bending wave generation means so that the object (10) approaches the desired position.

2. The device according to claim 1, wherein the bending wave generation means (141) comprises a plurality of structure borne sound generation means (160) arranged along an edge of the surface.

3. The device according to claim 1 or 2, wherein the surface (12) is formed by a plate (150) which comprises a bending wave reflection attenuation termination at its edge.

4. The device according to one of claims 1 to 3, wherein the means (14) for determining a position of the object on the surface comprises:
a display (610), wherein the surface is arranged in the direction of the viewer in front of the display, wherein the display is visible for a viewer through the surface;
a control means (618) for controlling the display such that the same displays laterally varying information;
an optical sensor (628) accommodated in or at the object (10) for optically scanning a supporting surface on which the level bottom of the object is supported in order to obtain a scan result with reference to the laterally varying information; and
a determination means for determining the position of the object depending on the scan result.

5. The device according to one of claims 1 to 4, further comprising a nozzle plate forming the surface and comprising a plurality of nozzles in the surface through which the compressed air may be guided in order to form an air cushion between the object and the surface.

6. A method for moving an object (10) across a surface (12) by means of bending waves, the method comprising:
determining a position of the object (10) on the surface; and
generating bending waves in the surface (12) so that the object (10) approximates its desired position on the surface (12) based on the bending waves,
wherein generating the bending waves is performed according to a wave field synthesis and using a resulting component of movement, passing tangentially to the surface, of surface points of the surface at the surface wave peaks (144) generated by the bending wave generation means so that the object (10) approaches the desired position.

7. A computer program having a program code for executing the method according to claim 6 when the computer program is executed on a computer.

## Revendications

1. Dispositif pour déplacer un objet (10) sur une surface (12), avec
un moyen de génération d'ondes de flexion (141) destiné à générer des ondes de flexion dans la surface (12);
un moyen (14) destiné à déterminer une position de l'objet (10) sur la surface; et
un moyen (18) destiné à commander le moyen de génération d'ondes de flexion (141) de sorte que l'objet (10) se rapproche, par suite des ondes de flexion, de sa position souhaitée sur la surface (12),
dans lequel le moyen d'activation (18) est conçu pour commander le moyen de génération d'ondes de flexion (141) selon une synthèse de champ d'onde et à l'aide d'une composante de mouvement résultante, s'étendant tangentiellement à la surface, de points de la surface aux sommets d'ondes de surface (144) générées par le moyen de génération d'ondes de flexion de sorte que l'objet (10) se rapproche de la position désirée.

2. Dispositif selon la revendication 1, dans lequel le moyen de génération d'ondes de flexion (141) présente une pluralité de moyens de génération de bruit structurel (160) qui sont disposés le long d'un bord de la surface.

3. Dispositif selon la revendication 1 ou 2, dans lequel la surface (12) est formée par une plaque (150) qui présente, sur son bord, un arrêt d'atténuation de réflexion d'ondes de flexion.

4. Dispositif selon l'une des revendications 1 à 3, dans lequel le moyen (14) destiné à déterminer une position de l'objet sur la surface présente les caractéristiques suivantes:
un affichage (610), la surface étant disposée, dans la direction de l'observateur, devant l'écran, l'affichage étant visible pour un observateur à travers la surface;
un moyen d'activation (618) destiné à activer l'affichage de sorte que cette dernière affiche une information variable latéralement;
un capteur optique (628) qui est logé dans ou sur l'objet (10), pour le balayage optique d'une surface de d'appui sur laquelle s'appuie le fond plat de l'objet, pour obtenir un résultat de balayage par rapport à l'information variable latéralement; et
un moyen destiné à déterminer la position de l'objet en fonction du résultat de balayage.

5. Dispositif selon l'une des revendications 1 à 4, comprenant par ailleurs une plaque à tuyères formant la surface et une pluralité de tuyères dans la surface à travers laquelle peut être guidé de l'air comprimé, pour former un coussin d'air entre l'objet et la surface.

6. Procédé pour déplacer un objet (10) sur une surface (12) au moyen d'ondes de flexion, le procédé présentant les étapes suivantes consistant à:
déterminer une position de l'objet (10) sur la surface; et
générer des ondes de flexion dans la surface (12), de sorte que l'objet (10) se rapproche, du fait des ondes de flexion, de sa position souhaitée sur la surface (12),
dans lequel la génération des ondes de flexion est réalisée selon une synthèse de champ d'ondes et à l'aide d'une composante de mouvement résultante, s'étendant tangentiellement à la surface, de points de la surface aux sommets d'ondes de surface générées par le moyen de génération d'ondes de flexion (144) de sorte que l'objet (10) se rapproche de la position désirée.

7. Programme d'ordinateur avec un code de programme pour réaliser le procédé selon la revendication 6 lorsque le programme d'ordinateur est exécuté sur un ordinateur.
